(19) Europäisches Patentamt
European Patent Office
Office européen des brevets

(11) **EP 2 988 846 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**18.01.2023 Patentblatt 2023/03**

(45) Hinweis auf die Patenterteilung:
**31.05.2017 Patentblatt 2017/22**

(21) Anmeldenummer: **14718378.4**

(22) Anmeldetag: **15.04.2014**

(51) Internationale Patentklassifikation (IPC):
***B01D 39/16*** *(2006.01)*

(52) Gemeinsame Patentklassifikation (CPC):
**B01D 39/1623;** B01D 2239/025; B01D 2239/065;
B01D 2239/1208; B01D 2239/1233

(86) Internationale Anmeldenummer:
**PCT/EP2014/057631**

(87) Internationale Veröffentlichungsnummer:
**WO 2014/173733 (30.10.2014 Gazette 2014/44)**

(54) **Luftfilterelement mit einem Filtermedium**

FILTER MEDIUM, PARTICULARLY AN AIR FILTER MEDIUM AND FILTER ELEMENT, PARTICULARLY AN AIR FILTER ELEMENT, HAVING A FILTER MEDIUM

MILIEU FILTRANT, EN PARTICULIER MILIEU DE FILTRE À AIR ET ÉLÉMENT DE FILTRE, EN PARTICULIER ÉLÉMENT DE FILTRE À AIR, POURVU D'UN MILIEU FILTRANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.04.2013 DE 102013006952**
**17.05.2013 DE 102013008391**

(43) Veröffentlichungstag der Anmeldung:
**02.03.2016 Patentblatt 2016/09**

(60) Teilanmeldung:
**17171817.4 / 3 231 497**
**19178002.2 / 3 552 683**

(73) Patentinhaber: **MANN+HUMMEL GmbH**
**71636 Ludwigsburg (DE)**

(72) Erfinder:
• **WALZ, Stefan**
**71691 Freiberg (DE)**
• **KELLER, Mario**
**71364 Winnenden (DE)**
• **PFANNKUCH, Steffen**
**70178 Stuttgart (DE)**
• **HEIM, Michael**
**70825 Korntal-Münchingen (DE)**
• **POLJAK, Ivanka**
**43640 Askim (SE)**
• **NEUMANN, Jens**
**70193 Stuttgart (DE)**
• **KILIAN, Alexander**
**71640 Ludwigsburg (DE)**
• **MBADINGA MOUANDA, Gelase**
**53000 Laval (FR)**

(74) Vertreter: **Maiwald GmbH**
**Elisenhof**
**Elisenstraße 3**
**80335 München (DE)**

(56) Entgegenhaltungen:
**EP-A2- 1 911 960        WO-A1-2009/136395**
**US-A1- 2011 259 813**

EP 2 988 846 B2

## Beschreibung

Die Erfindung betrifft das technische Gebiet der Aufbereitung und Filterung von Fluiden und insbesondere Luft, beispielsweise die Filterung von Flüssigkeit wie beispielsweise Öl oder von Luft für Verbrennungskraftmaschinen.

## Technischer Hintergrund der Erfindung

Luftfilter werden beispielsweise in der Luftzufuhr von Verbrennungskraftmaschinen verwendet, um die für die Verbrennung zugeführte Luft von Schadstoffen und Schmutzpartikeln zu reinigen, so dass einem Verbrennungsprozess in der Verbrennungskraftmaschine nur gereinigte Luft zugeführt wird.

Ein Luftfilter weist eine Einströmöffnung für ungereinigte Rohluft und eine Ausströmöffnung für die gefilterte Reinluft sowie ein Luftfiltermedium auf, wobei das Luftfiltermedium die eigentliche Filterfunktion erfüllt. Die Luftzufuhr der Verbrennungskraftmaschine erfolgt über die Ausströmöffnung des Luftfilters, wobei die Verbrennungskraftmaschine die benötigte Luft bzw. Luftmenge ansaugt. Das Luftfiltermedium besteht beispielsweise aus einem Filterpapier, durch welches die zu filternde Luft strömt, wenn die Verbrennungskraftmaschine Luft ansaugt, so dass die Schmutzpartikel in dem Luftfiltermedium von der durchströmenden Luft abgetrennt bzw. abgeschieden werden.

Das Luftfiltermedium kann gefaltet sein (Faltenfilter) oder eine Vielzahl von Filterkammern (Flötenfilter) aufweisen, um die Oberfläche des Filters zu vergrößern, wodurch sich auch die Lebensdauer eines Luftfilterelementes verlängert, da eine größere Filteroberfläche mehr Schmutzpartikel aufnehmen kann, bevor der durch abgeschiedenen Staub verursachte Druckverlust am Luftfiltermedium derart angestiegen ist, dass die Leistung der Verbrennungskraftmaschine abnimmt.

EP 2 060 311 A1 beschreibt ein Luftfiltermedium für einen Staubsaugerbeutel mit zumindest einer Lage aus einem trockengelegten Vlies, welches eine polymere Endlosfaser aufweist

US 2011/259813 A1 offenbart ein Filtermedium mit einer ersten Filterlage und einer zweite Nanofaserlage. Die erste Filterlage weist mindestens zwei Faserphasen, eine "offene" Faserphase und eine "dichte" Faserphase auf. Die in Strömungsrichtung relative Position der zwei Faserphasen kann umgekehrt werden. Bei einem kontinuierlichen können die jeweiligen Fasern zwischen zwei angrenzenden Faserphasen eine "Zwischenfaserphase" (Mittelabschnitt) formen.

## Zusammenfassung der Erfindung

Es kann als eine Aufgabe der Erfindung betrachtet werden, ein Luftfilterelement mit einem Filtermedium und einen Filter bereitzustellen, welches bzw. welcher sich durch eine erhöhte Schmutzpartikelspeicherkapazität auszeichnet. Gemäß einem Aspekt ist ein Luftfilterelement gemäß Anspruch 1 mit einem Filtermedium angegeben, das eine erste Filterlage und eine zweite Filterlage aufweist. Die erste Filterlage weist einen ersten Filterlagenabschnitt und einen zweiten Filterlagenabschnitt auf, wobei der zweite Filterlagenabschnitt in einer Durchströmungsrichtung des Filtermediums hinter dem ersten Filterlagenabschnitt angeordnet ist. Der erste Filterlagenabschnitt weist eine erste Packungsdichte von Fasern bzw. einen ersten Packungsdichtewert auf und der zweite Filterlagenabschnitt weist eine von der ersten Packungsdichte von Fasern abweichende zweite Packungsdichte von Fasern bzw. einen von dem ersten Packungsdichtewert abweichenden zweiten Packungsdichtewert auf. Die zweite Filterlage ist in Durchströmungsrichtung hinter der ersten Filterlage angeordnet und weist Nanofasern auf und kann in einer Ausführungsform eine Nanofaserfilterlage sein. Bei der Packungsdichte und einem Packungsdichtewert handelt es sich insbesondere um die mittlere Packungsdichte bzw. den mittleren Packungsdichtewert eines Filterlagenabschnittes oder einer Filterlage.

Die Durchströmungsrichtung verläuft quer oder orthogonal zu der ersten und zweiten Filterlage und somit auch quer oder orthogonal zu dem ersten und zweiten Filterlagenabschnitt der ersten Filterlage. Damit durchströmt der zu filternde Luftstrom alle Filterlagen des Luftfiltermediums und auch alle Filterlagenabschnitte jeder Filterlage.

Durch die hintereinander angeordneten Filterlagenabschnitte mit unterschiedlicher Packungsdichte kann erreicht werden, dass das Filtermedium Schmutzpartikel in seinem Volumen speichert und in Abhängigkeit von der Größe der Schmutzpartikel diese nacheinander abscheidet und zwar die vergleichsweise großen Schmutzpartikel zuerst, d. h. durch den ersten Filterlagenabschnitt mit einem hohen Porositätswert, und die feineren Schmutzpartikel durch den in Durchströmungsrichtung tiefer liegenden zweiten Filterlagenabschnitt mit einem niedrigeren Porositätswert.

Die zweite Filterlage stellt zusätzlich eine abschließende Filterfunktion durch eine Nanofaserfilterlage bereit. Damit können kleinste Schmutzpartikel aus dem zu filternden Fluidstrom herausgefiltert werden. Die zweite Filterlage weist insbesondere im Vergleich zu der ersten Filterlage und vor allem zu dem zweiten Filterlagenabschnitt Poren mit einer geringeren Größe auf, so dass feinere Schmutzpartikel aus dem zu filternden Fluid gefiltert werden können.

Ein Filterlagenabschnitt ist eine Ebene einer Filterlage des Filtermediums, wobei der Filterlagenabschnitt sich quer zu der Durchströmungsrichtung durch zumindest einen Teil der Filterlage und des Filtermediums erstreckt. Wird ein Fluidstrom durch das Filtermedium geführt, so durchquert der Fluidstrom in Durchströmungsrichtung einen oder mehrere Filterlagenabschnitte nachelnander.

Ein Filterlagenabschnitt ist damit ein Tiefenabschnitt einer Filterlage in Richtung der Durchströmungsrichtung mit vorgebbarer Tiefe und kann beispielsweise in der Größenordnung von einigen μm, z. B. zwischen 10 μm und 100 μm, oder von einigen mm, z. B. 1 mm, sein.

Ein Fluidstrom kann ein Gas- oder Liquidstrom sein, der durch das Filterelement zum Zwecke der Filterung bzw. Abscheidung von Verschmutzungen oder Schmutzpartikeln geführt wird. Es sei darauf hingewiesen, dass im Folgenden teilweise ein Luftfilter beschrieben wird, sich die Erläuterungen zu dem Aufbau des Luftfilters aber auch auf ein Filtermedium im Allgemeinen beziehen können.

Im Folgenden werden zunächst die in diesem Dokument verwendeten Begriffe definiert.

**Definitionen**

Die Packungsdichte ist ein Maß für den Anteil der Filterfasern pro Tiefe eines Filterlagenabschnittes, d. h. dass die Packungsdichte als Packungsdichte von Fasern bzw. Filterfasern pro Flächen- oder Volumeneinheit zu verstehen ist. Die Packungsdichte kann für jede Filterlage und für jeden Filterlagenabschnitt bestimmt werden, beispielsweise über in Kunstharz eingebettete Schliffbilder bzw. Schnittbilder des Luftfiltermediums. Ein solches Schliffbild wird einer Bildaufnahme zugeführt und die Fläche des Schliffbildes wird dahingehend ausgewertet, dass der von Fasern bedeckte Anteil der Fläche des Schliffbildes und die Gesamtfläche eines Filterlagenabschnittes oder der nicht von Fasern bedeckte Anteil der Fläche des Schliffbildes und die Gesamtfläche eines Filterlagenabschnittes zueinander in Verhältnis gesetzt werden.

Die Bestimmung der Packungsdichte kann auf der Bildaufnahme durch Auswertung der Bildpunkte erfolgen, auf denen eine Faser zu sehen ist und derjenigen Bildpunkte, die einen Zwischenraum anzeigen. Bei feststehender bzw. bekannter Gesamtanzahl der Bildpunkte in dem Filterlagenabschnitt kann damit die Packungsdichte bestimmt werden, indem die Anzahl der Bildpunkte, die eine Filterfaser zeigen, ins Verhältnis zu der Gesamtanzahl der Bildpunkte in dem Filterlagenabschnitt gesetzt wird. Alternativ kann die Anzahl der Bildpunkte, die einen Zwischenraum zeigen, von der Gesamtanzahl der Bildpunkte abgezogen werden, um so beispielsweise einen Kontrollwert zu haben. In Abhängigkeit davon, ob die Zwischenräume oder die Fasern auf dem Schnittbild besser erkennbar und auswertbar sind, können die entsprechenden Bildpunkte ausgezählt werden.

Die so ermittelte Packungsdichte ist eine mittlere Packungsdichte des ausgewerteten Filterlagenabschnittes. Je kleiner ein solcher Filterlagenabschnitt festgelegt wird, d. h. je kleiner die Tiefe eines Filterlagenabschnittes in Richtung der Durchströmungsrichtung ist, desto geringer sind die Abweichungen der Packungsdichte an den Rändern des Filterlagenabschnittes von dem ermittelten Mittelwert.

Die Packungsdichte kann auch über eine dreidimensionale Computertomographieaufnahme bestimmt werden. Analog zu den Bildpunkten einer Bildaufnahme gibt es bei einer dreidimensionalen Aufnahme Raumpunkte, deren Anzahl und Größe von den technischen Rahmendaten des aufnehmenden Gerätes abhängen. Die Bestimmung der Packungsdichte einer dreidimensionalen Aufnahme mittels Raumpunkten erfolgt dabei analog zu dem Verfahren mit Bildpunkten. Die Raumpunkte beinhaltend einen Zwischenraum und die Raumpunkte beinhaltend eine Filterfaser können jeweils in Verhältnis gesetzt werden zu der Gesamtanzahl von Raumpunkten, um so die Packungsdichte zu bestimmen.

Packungsdichtesprung bezeichnet eine sprunghafte Veränderung der Packungsdichte über die Materialtiefe des Luftfiltermediums, d. h. dass zwei aneinander angrenzende Filterlagenabschnitte an dem Übergang zwischen den aneinander angrenzenden Filterlagenabschnitten eine unterschiedliche Packungsdichte aufweisen. Ein solcher Packungsdichtesprung kann insbesondere als zumeist unerwünschte Schmutzbarriere fungieren und zu einer Verstopfung eines Luftfiltermediums führen, bevor dieses die maximale Schmutzpartikelspeicherkapazität erreicht hat, indem die Schmutzpartikel einen Tiefenabschnitt des Luftfiltermediums um den Packungsdichtesprung herum belegen und verstopfen.

Hierbei kann insbesondere eine prozentuale Änderung der Packungsdichte zwischen der Abströmfläche einer Filterlage und der Anströmfläche einer in Durchströmungsrichtung angrenzenden Filterlage ausschlaggebend für das Verhindern von Schmutzbarrieren sein. Der Packungsdichtegradient kann als Maß für die Änderung der Packungsdichte über die Materialdicke einer Filterlage in Durchströmungsrichtung dienen. Die Packungsdichte erhöht sich entweder durch eine abnehmende Anzahl von Faserzwischenräumen oder durch eine abnehmende Größe von Faserzwischenräumen auf einem Tiefenabschnitt einer Filterlage, d. h. in einem Filterlagenabschnitt.

Ein Gradient wird im Zusammenhang dieses Dokumentes als Wert verwendet, der die Änderungsrate einer Größe angibt. Der Packungsdichtegradient beispielsweise gibt an, um welche Rate sich die Packungsdichte eines Luftfiltermediums mit zunehmender Materialtiefe bzw. Materialdicke in Richtung der Durchströmungsrichtung des Luftfiltermediums verändert. Der Faserdurchmessergradient gibt an, um welche Rate sich der Faserdurchmesser der Fasern in einem Luftfiltermedium mit zunehmender Materialtiefe bzw. Materialdicke in Richtung der Durchströmungsrichtung des Luftfiltermediums verändert.

Die Porosität einer Filterlage ist ein Maß für die Anzahl und die Größe der Zwischenräume zwischen den Filterfasern der Filterlage. Die Porosität kann beispielsweise angeben, welcher Widerstand einem Fluidstrom wie beispielsweise einem Luftstrom, der eine Filterlage durchdringt, entgegen gesetzt wird. Eine Filterlage ist dabei an der Anströmfläche und an der Abströmfläche offen, so dass ein Fluidstrom an der Anströmfläche in das Material eindringen kann und an der Abströmfläche aus dem Material herausdringen kann. Die Porosität kann als das Verhältnis von Hohlraumvolumen zu Gesamtvolumen angesehen werden. Mit zunehmendem Wert der Porosität ist der Anteil des Hohlraumvolumens an dem Gesamtvolumen größer.

Das Porenvolumen kann als prozentualer Anteil von dem Gesamtvolumen einer Probe bestimmt werden. Dies erfordert die Verwendung des Flächengewichts und der Materialdicke der Probe. Die zugehörige Gleichung lautet:

$$(2) \quad \varepsilon = 100 - (Fg / (\rho \times 10 \times d))$$

Dabei bedeuten

$\varepsilon$: Porenvolumen als prozentualer Anteil des Gesamtvolumens in Prozent;
Fg: Flächengewicht der Probe in g/m$^2$;
$\rho$: Dichte des verwendeten Filterstoffes, d. h. beispielsweise der Fasern; für reine Zellstoffpapiere ohne Zusatz von Kunstfasern und/oder Glasfasern beträgt diese 1,51 g/cm$^3$; bei Proben aus verschiedenen Fasern kann eine gemittelte Dichte verwendet werden, die sich aus der jeweiligen individuellen Dichte sowie dem Anteil der jeweiligen Faser an der Probe ergibt, d. h. dass für die Bestimmung des Porenvolumens von Mischpapieren die spezifische Dichte und der Mengenanteil der jeweiligen Bestandteile bekannt sein muss;
d: Dicke der Probe in mm;

Die Porosität eines Luftfiltermediums, einer Filterlage oder eines Filterlagenabschnittes kann insbesondere einzeln über die Angabe des Porenvolumens definiert werden.

Dabei kann eine einzelne Filterlage der Messung zugeführt werden. Eine Filterlage kann aber auch in einzelne Tiefenabschnitte aufgeteilt dieser Messung zugeführt werden. Je feiner die Tiefenabschnitte sind, deren Porosität so bestimmt wird, desto genauer kann ein Verlauf der Porosität über die Materialtiefe einer Filterlage angegeben werden.

Ein Porositätssprung ist eine sprunghafte Veränderung der Porosität an aneinander grenzenden Oberflächen benachbarter Filterlagen oder Filterlagenabschnitten.

Die Packungsdichte kann als Gegenstück der Porosität betrachtet werden. Die Porosität wird dabei insbesondere mit Hilfe der Faserzwischenräume oder Poren des Luftfiltermediums ermittelt und angegeben, wohingegen die Packungsdichte insbesondere mit Hilfe der vorhandenen Fasern ermittelt und angegeben werden kann. Packungsdichte und Porosität können als zueinander komplementäre Größen betrachtet werden.

Die Bestimmung der Luftdurchlässigkeit eines Luftfiltermediums kann gemäß DIN EN ISO 9237 erfolgen, welche eine Prüffläche von 20 cm$^2$ und einen Differenzdruck von 200 Pa vorsieht. Dabei sind Proben an zehn verschiedenen Stellen des zu prüfenden Luftfiltermediums zu entnehmen und zu prüfen. Die Proben haben im Regelfall einen Durchmesser von 56 mm und sind kreisrund. Sollte das Filtermedium zu schmal sein, um diese Probengröße zu liefern, kann der Durchmesser einer Probe 42 mm oder sogar 25 mm betragen. Das Ergebnis wird mit der Einheit l/m$^2$s als Mittelwert und als Streuung angegeben.

Ein Luftfiltermedium bzw. eine einzelne Filterlage besteht aus eine Vielzahl von Fasern. Eine Faser wird unter anderem durch ihren Faserdurchmesser bzw. allgemein durch ihren Faserquerschnitt bzw. die Querschnittsfläche gekennzeichnet. Der Faserdurchmesser bzw. Faserquerschnitt wird als mittlerer Faserdurchmesser bzw. Faserquerschnitt angegeben, wobei für diese Werte eine Angabe mittels logarithmischer Normalverteilung verwendet wird.

Ein Luftfiltermedium kann aus einer oder mehreren Filterlagen bestehen, die ihrerseits jeweils aus einer oder aus mehreren Fasern bestehen. Die Filterwirkung eines Luftfiltermediums ergibt sich dabei dadurch, dass ein Luftstrom die Filterlagen durchströmt und die in dem Luftstrom enthaltenen Schmutzpartikel in den Zwischenräumen der Fasern aufgehalten oder an den Fasern haften bleiben und aus dem Luftstrom abgetrennt werden.

Ein Faserdurchmessergradient gibt an, um welches Maß sich der Durchmesser der Fasern eines Luftfiltermediums über die Materialtiefe einer Filterlage oder eines Filterlagenabschnittes verändert. Dies gilt in analoger Weise auch für einen Faserquerschnittsgradienten.

Der Faserdurchmessergradient zwischen der ersten Filterlage und der zweiten Filterlage soll möglichst gering sein, d. h. dass der Faserdurchmesser der Fasern in dem zweiten Filterlagenabschnitt möglichst gering von dem Faserdurchmesser der Fasern in der zweiten Filterlage abweicht.

Unter Nanofasern werden im Zusammenhang mit dieser Beschreibung Fasern mit einem Faserdurchmesser zwischen ungefähr 50 nm und ungefähr 500 nm, vorzugsweise zwischen ungefähr 100 nm und 300 nm verstanden.

Ein Nanofaserlage bzw. Nanofaserfilterlage ist eine Filterlage, welche Nanofasern aufweist oder teilweise oder vollständig aus Nanofasern besteht.

Die Begriffe Meltblown, Spunbond, naßgelegte und trockengelegte Lagenherstellung, Krempelvlies, Filamentspinnvlies und Kreuzlagenvlies werden definiert in "Vliesstoffe: Rohstoffe, Herstellung, Anwendung, Eigenschaften, Prüfung, 2. Auflage, 2012, Weinheim", ISBN: 978-3-527-31519-2.

Eine Filterlage weist eine Dicke in Durchströmungsrichtung auf und wird von einem zu filternden Fluidstrom quer oder orthogonal zu einer Erstreckungsebene der Filterlage passiert. Eine Filterlage kann in einem zusammenhängenden Herstellungsprozess gefertigt werden und kann Fasern eines gleichen Herstellungsverfahrens aufweisen, wobei die Fasern einen voneinander abweichenden Faserdurchmesser oder Faserquerschnitt aufweisen können.

Denier: Maß für die Faserfeinheit, Gewicht pro Länge, hier wird ausgegangen von 1 den = 1 gramm / 9000 Meter

Tex: Maß für die Faserfeinheit, Gewicht pro Länge, 1 tex = 1 gramm / 1000 Meter; 1 dtex (Dezitex) = 0,1 tex = 1 gramm / 10000 Meter.

Der Begriff "stetig" wird im Zusammenhang mit diesem Dokument dahingehend verwendet, dass die Veränderung eines Wertes beschrieben wird, insbesondere die Veränderung der Packungsdichte einer Filterlage mit zunehmender Materialtiefe in Durchströmungsrichtung dieser Filterlage. Eine stetige Veränderung eines dieser Werte bedeutet, dass ein Wert der Packungsdichte mit zunehmender Materialtiefe bzw. mit zunehmender Bewegung eines Luftstroms in Durchströmungsrichtung durch das Luftfiltermedium sich bezüglich seines skalaren Wertes nur in eine Richtung verändert, beispielsweise zunimmt. Stetig bedeutet dabei, dass der Wert der Packungsdichte bei zunehmender Materialtiefe zunimmt bzw. ansteigt. Dabei muss dieser Wert nicht gleichmäßig zunehmen und kann über einen ersten Tiefenabschnitt eine erste Zuwachsrate haben, und über einen zweiten Tiefenabschnitt eine zweite Zuwachsrate haben, die entweder größer oder kleiner als die erste Zuwachsrate ist.

In diesem Zusammenhang bedeutet "halbstetig", dass ein Wert beispielsweise der Packungsdichte bei zunehmender Materialtiefe über zumindest einen Teiltiefenabschnitt des Luftfiltermediums konstant bleibt, während die Packungsdichte sich in der übrigen Materialtiefe nur in eine Richtung verändert.

Stetig und halbstetig haben auf jeden Fall die Eigenschaft gemeinsam, dass die Packungsdichte eine positive (oder negative) Zuwachsrate über die Materialtiefe nicht umkehrt. Halbstetig umfasst dabei eine Zuwachsrate von null, wohingegen stetig eine Zuwachsrate von größer als null bedeutet.

Eine konstante Zunahme eines Wertes, beispielsweise der Packungsdichte von Fasern in einer ersten Filterlage, bedeutet, dass eine Zuwachsrate der Packungsdichte über die gesamte Materialtiefe der ersten Filterlage gleich bleibt. In anderen Worten beschreibt die Zuwachsrate in diesem Fall eine lineare Funktion, welche eine gleichbleibende Steigung hat, wobei die Steigung die Zuwachsrate der Packungsdichte ist.

Die Angabe des Flächengewichts bzw. der flächenbezogenen Masse eines Filtermediums erfolgt für Papier nach DIN EN ISO 536. Dabei können folgende Abweichungen vorgenommen werden: Es werden Proben an zehn verschiedenen Stellen eines Musters entnommen und geprüft. Die Probengröße kann einen Durchmesser von 56 mm haben, wenn das zu prüfende Medium schmaler sein sollte, kann der Durchmesser auch 42 mm oder 25 mm sein. Als Ergebnis werden die Einzelwerte der Proben sowie ein Mittelwert samt Streuung in der Einheit g/m$^2$ angegeben.

Die Angabe des Flächengewichts bzw. der flächenbezogenen Masse eines Filtermediums erfolgt für Vlies nach DIN EN 29 073-1. Danach sind Proben an zehn verschiedenen Stellen eines Musters zu entnehmen und zu prüfen. Die Probengröße beträgt mindestens 50.000 mm$^2$ (z. B. 250 mm x 250 mm), alternativ sind auch 100 cm$^2$ zulässig, wenn das zu prüfende Medium kleiner sein sollte. Als Ergebnis werden die Einzelwerte der Proben sowie ein Mittelwert samt Streuung in der Einheit g/m$^2$ angegeben.

Die Bestimmung der Dicke für glattes Papier erfolgt nach ISO 534, bevorzugterweise mit abweichender Flächenbelastung von 1 N/cm$^2$. Es werden Proben an zehn verschiedenen Stellen eines Musters entnommen und geprüft. Die Probengröße kann einen Durchmesser von 56 mm haben. Falls keine ebenen Proben mit einem Durchmesser entsprechend einem Durchmesser des Messfußes eines Prüfgerätes, z. B. 16 mm, zur Verfügung stehen, können Streifen des zu prüfenden Filtermediums ausgeschnitten und vermessen werden, so dass eine in sich flächige Probe vermessen werden kann. Als Ergebnis werden die Einzelwerte der Proben sowie ein Mittelwert samt Streuung in der Einheit mm angegeben.

Die Bestimmung der Dicke für Vliese erfolgt nach DIN EN ISO 9073-2. Es werden Proben an zehn verschiedenen Stellen eines Musters entnommen und geprüft. Die Proben können eine Größe von DIN A5 haben und werden an zwei Stellen in der Flächenmitte gemessen. Falls keine Proben dieser Größe verfügbar sind, können abweichend auch kleinere Proben gemessen werden. Als Ergebnis werden die Einzelwerte der Proben sowie ein Mittelwert samt Streuung in der Einheit mm angegeben.

Die Bestimmung der Dicke für voluminöse Vliese erfolgt nach DIN EN ISO 9073-2. Voluminöse Vliese sind Vliesstoffe, die bei einer Änderung eines aufgebrachten Drucks von 0,1 kPa auf 0,5 kPa um mindestens 20 % zusammendrückbar sind, d. h. auf 80 % der Ausgangsdicke vor Änderung des aufgebrachten Drucks. Es werden Proben an zehn verschiedenen Stellen eines Musters entnommen und geprüft. Die Proben können eine Größe von 130 mm x 80 mm haben. Falls keine Proben dieser Größe verfügbar sind, können abweichend auch kleinere Proben gemessen werden. Als Ergebnis werden die Einzelwerte der Proben sowie ein Mittelwert samt Streuung in der Einheit mm angegeben.

**Ende des Definitionen-Abschnittes**

Gemäß einer weiteren Ausführungsform weist die erste Filterlage einen Mittelabschnitt auf, der in Durchströmungsrichtung zwischen dem ersten Filterlagenabschnitt und dem zweiten Filterlagenabschnitt angeordnet ist.

Der Mittelabschnitt kann damit ein Luftfiltermedium mit erhöhter Dicke bzw. Tiefe der Durchströmungsrichtung bereitstellen. Mit zunehmender Dicke des Luftfiltermediums in Durchströmungsrichtung kann die Schmutzpartikelspeicherkapazität des Luftfiltermediums erhöht werden.

Der erste Filterlagenabschnitt und der Mittelabschnitt können so ausgeführt sein, dass bei einem Übergang von dem ersten Filterlagenabschnitt zu dem Mittelabschnitt kein Packungsdichtesprung erfolgt, d. h. dass an diesem Übergang die Packungsdichte des ersten Filterlagenabschnittes im Wesentlichen der Packungsdichte des Mittelabschnittes entspricht.

In analoger Weise findet auch bei dem Übergang von dem Mittelabschnitt zu dem zweiten Filterlagenabschnitt ein Packungsdichtesprung nicht statt bzw. die Packungsdichte des Mittelabschnittes ist bei dem Übergang zu dem zweiten Filterlagenabschnitt im Wesentlichen gleich mit der Packungsdichte des zweiten Filterlagenabschnittes.

Gemäß einer weiteren Ausführungsform weist die erste Filterlage einen Anströmtiefenabschnitt auf und der erste Filterlagenabschnitt ist in Durchströmungsrichtung hinter dem Anströmtiefenabschnitt angeordnet.

Dies bedeutet, dass die erste Filterlage in Durchströmungsrichtung zunächst einen Anströmtiefenabschnitt mit ansteigender Packungsdichte hat, welcher den Beginn bzw. die Eintrittsoberfläche des zu filternden Fluidstroms in das Filtermedium darstellt. Die erste Oberfläche stellt eine Fläche bzw. eine Ebene (welche auch gekrümmt sein kann oder einen beliebigen anderen geometrischen Verlauf aufweisen kann) dar, die von dem zu filternden Luftstrom durchströmt wird.

Gemäß einer weiteren Ausführungsform ist der Anströmtiefenabschnitt an der ersten Oberfläche des Luftfiltermediums angeordnet.

Dies bedeutet, dass die Rohluft, also die zu filternde Luft, dem Luftfiltermedium an der ersten Oberfläche der ersten Filterlage zugeführt wird. In anderen Worten befindet sich in dieser Ausführungsform in Durchströmungsrichtung vor dem Anströmtiefenabschnitt keine weitere Filterlage, die zu dem Luftfiltermedium gehört.

Gemäß einer weiteren Ausführungsform weist die erste Filterlage einen Abströmtiefenabschnitt auf und der zweite Filterlagenabschnitt ist in Durchströmungsrichtung vor dem Abströmtiefenabschnitt angeordnet.

Der Abströmtiefenabschnitt stellt damit zumindest einen Teil derjenigen zweiten Oberfläche der ersten Filterlage dar, über die der von der ersten Filterlage gefilterte Luftstrom die erste Filterlage verlässt und einer Filterung durch die zweite Filterlage, also durch die Nanofaserfilterlage zugeführt wird.

In anderen Worten bedeutet dies, dass der erste Filterlagenabschnitt, der Mittelabschnitt und der zweite Filterlagenabschnitt in der ersten Filterlage in Durchströmungsrichtung zwischen dem Anströmtiefenabschnitt und dem Abströmtiefenabschnitt angeordnet sind.

Für die Ermittlung der Packungsdichte bzw. des Packungsdichtegradienten können damit der Anströmtiefenabschnitt und der Abströmtiefenabschnitt in einer Ausführungsform unberücksichtigt bleiben, da es sich bei diesen beiden Tiefenabschnitten um Eigenschaften der ersten Filterlage handelt, die auf eine sog. Eintrittsbzw. Austrittsrauhigkeit des Filtermediummaterials zurückzuführen sind.

Gemäß einer weiteren Ausführungsform ist die zweite Filterlage an einer Abströmfläche des Filtermediums angeordnet.

Dies bedeutet, dass die zweite Filterlage, also die Nanofaserfilterlage, eine abschließende Feinstfiltration auf der Abströmseite des Filtermediums vornimmt und die Abströmfläche des Filtermediums darstellt, an welcher das gefilterte Fluid das Filtermedium in Richtung der Reinseite verlässt.

Gemäß einer weiteren Ausführungsform weist der erste Filterlagenabschnitt eine erste Packungsdichte von Fasern und der zweite Filterlagenabschnitt eine zweite Packungsdichte von Fasern auf, wobei ein Wert der zweiten Packungsdichte verschieden ist von einem Wert der ersten Packungsdichte.

Der erste Filterlagenabschnitt kann insbesondere mehr Faserzwischenräume und/oder größere Faserzwischenräume aufweisen als der zweite Filterlagenabschnitt.

Gemäß einer weiteren Ausführungsform nimmt eine Packungsdichte von Fasern der ersten Filterlage in Durchströmungsrichtung von dem ersten Filterlagenabschnitt zu dem zweiten Filterlagenabschnitt zu. Dies bedeutet beispielsweise, dass die Faserzwischenräume in der ersten Filterlage mit zunehmender Materialtiefe ausgehend von dem ersten Filterlagenabschnitt hin zu dem zweiten Filterlagenabschnitt betreffend ihre Anzahl und/oder betreffend ihre Größe abnehmen.

Dass die Packungsdichte des ersten Filterlagenabschnittes sich von der Packungsdichte des zweiten Filterlagenabschnittes unterscheidet, bedeutet damit, dass innerhalb der ersten Filterlage Schmutzpartikel unterschiedlicher Größe oder Ausdehnung aus dem Luftstrom gefiltert werden und in dem Luftfiltermedium gespeichert werden.

Gemäß einer weiteren Ausführungsform nimmt eine Packungsdichte von Fasern der ersten Filterlage in Durchströmungsrichtung von dem ersten Filterlagenabschnitt zu dem zweiten Filterlagenabschnitt stetig zu.

Dies bedeutet, dass ein Wert der Packungsdichte mit zunehmender Materialdicke bzw. mit zunehmender Bewegung eines Luftstroms in Durchströmungsrichtung durch das Luftfiltermedium sich bezüglich seines skalaren Wertes nur in eine Richtung verändert, in diesem Fall zunimmt. Stetig bedeutet dabei, dass der Wert der Packungsdichte bei zunehmender Materialtiefe zunimmt bzw. ansteigt. Dabei muss dieser Wert nicht gleichmäßig zunehmen.

In einer Ausführungsform kann die Packungsdichte bei zunehmender Materialtiefe zumindest abschnittsweise in Durchströmungsrichtung gleich bleiben, was auch als halbstetig bezeichnet werden kann.

Gemäß einer weiteren Ausführungsform nimmt eine Packungsdichte von Fasern der ersten Filterlage in Durchströmungsrichtung von dem ersten Filterlagenabschnitt zu dem zweiten Filterlagenabschnitt konstant zu.

Dies bedeutet, dass keine wesentlichen sprunghaften Veränderungen der Packungsdichte mit zunehmender Materialtiefe auftreten. Somit wird ein Packungsdichtesprung vermieden, so dass eine auf einen geringen Teil der Materialtiefe beschränkte Schmutzpartikelaufnahme verhindert wird, um somit eine vollständige Nutzung der Schmutzpartikelspeicherkapazität des Materialvolumens des Luftfiltermediums zu ermöglichen.

Weiterhin bedeutet eine konstante Zunahme der Packungsdichte von Fasern der ersten Filterlage, dass ein Zuwachsrate der Packungsdichte über die gesamte Materialtiefe der ersten Filterlage gleich bleibt. In anderen Worten beschreibt die Zuwachsrate in diesem Fall eine lineare Funktion, welche eine gleichbleibende Steigung hat, wobei die Steigung die Zuwachsrate der Packungsdichte ist.

Die Packungsdichte an der Oberfläche des Luftfiltermediums, welches die Abströmfläche der Reinluft ist, orientiert sich an den Anforderungen an die Reinheit, d. h. dem zu erzielenden Abscheidegrad.

In einer Ausführungsform beträgt die maximale Differenz der Packungsdichte zwischen aneinander angrenzenden Filterlagenabschnitten höchstens 15 %, vorzugsweise höchstens 10 % und weiter vorzugsweise höchstens 5 %.

Gemäß einer weiteren Ausführungsform ist ein Wert der zweiten Porosität verschieden von einem Wert der ersten Porosität.

Analog zu der Packungsdichte bedeutet dies, dass das Luftfiltermedium oder eine Filterlage Schmutzpartikel verschiedener Größe aus der Rohluft filtern und innerhalb des Materials des Luftfiltermediums speichern kann.

Gemäß einer weiteren Ausführungsform nimmt eine Porosität der ersten Filterlage in Durchströmungsrichtung von dem ersten Filterlagenabschnitt zu dem zweiten Filterlagenabschnitt ab.

Gemäß einer weiteren Ausführungsform nimmt eine Porosität der ersten Filterlage in Durchströmungsrichtung von dem ersten Filterlagenabschnitt zu dem zweiten Filterlagenabschnitt stetig ab.

Gemäß einer weiteren Ausführungsform nimmt eine Porosität der ersten Filterlage in Durchströmungsrichtung von dem ersten Filterlagenabschnitt zu dem zweiten Filterlagenabschnitt konstant ab.

In analoger Weise zu der Packungsdichte bedeutet dies, dass auf der Anströmseite eines Luftfiltermediums, einer Filterlage oder eines Filterlagenabschnittes die groben Schmutzpartikel aufgenommen werden, wohingegen mit zunehmender Materialdicke des Luftfiltermediums immer feinere Schmutzpartikel der Rohluft entnommen und in dem Luftfiltermedium gespeichert werden.

Die Porosität ist komplementär zu der Packungsdichte mit der Maßgabe, dass eine zunehmende Packungsdichte mit einer abnehmenden Porosität einher gehen kann, beispielsweise in einer Richtung des Luftstroms von der Anströmfläche eines Luftfiltermediums zu dessen Abströmfläche.

Damit gelten sinngemäß für die Porosität die gleichen Aussagen, die zu der Packungsdichte getroffen wurden, wobei in einer bevorzugten Ausführungsform die Porosität sich durch eine Abnahmerate kennzeichnet, im Gegensatz zu einer Zuwachsrate der Packungsdichte. Für die Veränderung eines Wertes der Porosität, also der Abnahmerate der Porosität gelten ebenfalls die Ausführungen zu der Stetigkeit, Halbstetigkeit und Konstanz der Zunahme der Zuwachsrate der Packungsdichte.

Eine stetige und insbesondere eine konstante Abnahmerate der Porosität, und somit eine Vermeidung von starken und sprunghaften Veränderungen der Porosität in dem Luftfiltermedium, kann das Herausbilden von Schmutzbarrieren in dem Luftfiltermedium vermeiden. Insbesondere sprunghafte und/oder starke Porositätsveränderungen, d. h. insbesondere Porositätsreduzierungen, in einem Luftfiltermedium können eine sog. "Schmutzbarriere" darstellen, an denen sich vermehrt und konzentriert Schmutzpartikel bündeln können, so dass das Luftfiltermedium schon bei einer vergleichsweise geringen Aufnahme von Schmutzpartikeln, die sich an der besagten Schmutzbarriere sammeln, verstopft oder in seiner Luftdurchlässigkeit eingeschränkt werden kann.

In einer bevorzugten Ausführungsform nimmt die Porosität innerhalb einer Filterlage konstant ab. In einer Ausführungsform kann die Porosität an den Oberflächen benachbart angeordneter Filterlagen gleich oder nahezu gleich sein. Damit kann gewährleistet werden, dass auch zwischen Filterlagen keine Schmutzbarriere entsteht, da auch dort kein starker und/oder sprunghafter Anstieg der Porosität stattfindet.

In einer Ausführungsform kann die erste Filterlage integral gefertigt sein, d. h. dass die erste Filterlage nicht durch das Zusammensetzen mehrerer Lagen entsteht, sondern als einzelne, integral gefertigte Filterlage ausgeführt ist. Insbesondere eine solche integrale Fertigung einer Filterlage kann dazu führen, dass sowohl die Anzahl als auch die Ausmaße der Packungsdichtesprünge oder der Porositätssprünge reduziert werden. Unter einem Ausmaß eines solchen Sprungs wird die Differenz zwischen den Werten der besagten Parameter Packungsdichtesprung und Porositätssprung in aneinander grenzenden Filterlagenabschnitten im Bereich der aneinander grenzenden Oberflächen verstanden.

Gemäß einer weiteren Ausführungsform liegt eine erste Oberfläche der zweiten Filterlage unmittelbar an der ersten Filterlage an.

Die erste Filterlage und die zweite Filterlage sind mechanisch miteinander gekoppelt oder flächig über die gesamte oder einen Teil der Fläche der aneinander grenzenden Oberflächen miteinander verklebt. Die erste Filterlage kann dabei eine Grobfiltrationsschicht und die zweite Filterlage eine Feinfiltrationsschicht in Form eines Nanofaserfilters sein.

Gemäß einer weiteren Ausführungsform ist eine Packungsdichte des zweiten Filterlagenabschnitts größer als eine Packungsdichte der zweiten Filterlage.

Dies bedeutet, dass die Packungsdichte über das Filtermedium betrachtet in Durchströmungsrichtung der ersten Filterlage zunächst ansteigt, wohingegen die Packungsdichte in der zweiten Filterlage im Vergleich zu der ersten Filterlage wieder sinkt.

In einer Ausführungsform hat die zweite Filterlage in Form einer Nanofaserlage kleinere Poren als zumindest der zweite Filterlagenabschnitt der ersten Filterlage. Diese Variante zeichnet sich durch den Vorteil aus, dass sich bei der Filtration an dem Übergang zwischen erster und zweiter Filterlage allmählich eine Kleinstpartikelschicht, z. B. Rußschicht, ausbildet, die in die erste Filterlage hinein wachsen kann. Dank der größeren Poren der ersten Filterlage ist ausreichend Platz für die Partikel vorhanden. Dadurch kommt es nicht zu einer frühzeitigen Verblockung. Insgesamt bewirkt dies eine Erhöhung der Schmutzpartikelspeicherkapazität.

Gemäß einer weiteren Ausführungsform weicht eine Porosität des zweiten Filterlagenabschnitts von einer Porosität der zweiten Filterlage um höchstens ungefähr 15 %, vorzugsweise um höchstens 10 % und weiter vorzugsweise um höchstens ungefähr 5 % ab.

Im Falle dass durch unterschiedliche Herstellungsverfahren der ersten Filterlage und der zweiten Filterlage eine genaue Anpassung der Porosität zwischen dem zweiten Filterlagenabschnitt und der zweiten Filterlage erfolgt ist, kann somit durch einen bestimmten Porositätssprung in dem angegebenen Umfang die Bildung einer Schmutzbarriere oder einer Sperrschicht im Wesentlichen optimal eingestellt werden.

Gemäß einer weiteren Ausführungsform weist der erste Filterlagenabschnitt erste Fasern mit einem ersten Querschnitt und der zweite Filterlagenabschnitt zweite Fasern mit einem zweiten Querschnitt auf, wobei der Mittelabschnitt erste Fasern und zweite Fasern aufweist.

Der Faserquerschnitt kann einer von mehreren Parametern sein, die es ermöglichen, eine gewünschte Packungsdichte oder Porosität einer Filterlage oder eines Filterlagenabschnittes bereitzustellen. Der Faserquerschnitt kann insbesondere durch die Größe einer Querschnittsfläche beschrieben sein. Sowohl für die Porosität als auch für die Packungsdichte ist der Faserquerschnitt allein kein hinreichender Beschreibungsparameter, da für diese beiden Werte gerade die Zwischenräume zwischen den verwendeten Fasern im Wesentlichen ausschlaggebend sein können.

In einer bevorzugten Ausführungsform werden die Fasern mit einem großen Querschnitt allerdings für einen Filterlagenabschnitt mit hoher Porosität und niedriger Packungsdichte verwendet, wohingegen die Fasern mit einem niedrigeren Querschnitt für einen Filterlagenabschnitt mit niedrigerer Porosität und höherer Packungsdichte verwendet werden.

Somit hat unter dieser Maßgabe der erste Filterlagenabschnitt eine höhere Porosität und eine niedrigere Packungsdichte als der zweite Filterlagenabschnitt, wenn die ersten Fasern einen größeren Querschnitt aufweisen als die zweiten Fasern.

Der Mittelabschnitt weist sowohl erste Fasern als auch zweite Fasern auf. Damit kann eine von dem ersten Filterlagenabschnitt zu dem zweiten Filterlagenabschnitt zunehmende Packungsdichte bzw. abnehmende Porosität bereitgestellt werden.

Gemäß einer weiteren Ausführungsform sind die ersten Fasern und die zweiten Fasern in dem Mittelabschnitt so angeordnet, dass ein Anteil der zweiten Fasern an der Summe der ersten Fasern und zweiten Fasern auf einem Tiefenabschnitt der ersten Filterlage in Richtung der Durchströmungsrichtung der ersten Filterlage zunimmt.

Unter der Maßgabe dass mit den ersten Fasern eine niedrige Packungsdichte bzw. hohe Porosität und mit den zweiten Fasern eine höhere Packungsdichte bzw. niedrigere Porosität erzielt wird, wird über einen mit zunehmender Materialtiefe in Durchströmungsrichtung ansteigenden Anteil von zweiten Fasern in dem Mittelabschnitt eine ansteigende Packungsdichte bzw. eine abnehmende Porosität erzielt.

In einem ersten Tiefenabschnitt, der in dem Mittelabschnitt in Durchströmungsrichtung vorne angeordnet ist, haben die ersten Fasern einen vergleichsweise hohen und die zweiten Fasern einen vergleichsweise geringen Anteil an der Summe der Fasern in diesem ersten Tiefenabschnitt, wohingegen in einem zweiten Tiefenabschnitt, der in dem Mittelabschnitt in Durchströmungsrichtung hinter dem ersten Tiefenabschnitt angeordnet ist, die ersten Fasern einen niedrigeren und die zweiten Fasern einen höheren Anteil an der Summe der Fasern in dem zweiten Tiefenabschnitt als in dem ersten Tiefenabschnitt haben.

Dies bedeutet also, dass gerade diese Anordnung der ersten Fasern und zweiten Fasern mit den entsprechenden Querschnitten das Bereitstellen der Packungsdichte bzw. Porosität in dem Mittelabschnitt mit beeinflussen kann.

Gemäß einer weiteren Ausführungsform sind die ersten Fasern und die zweiten Fasern in dem Mittelabschnitt so angeordnet, dass ein Anteil der zweiten Fasern an der Summe der ersten Fasern und zweiten Fasern auf einem Tiefenabschnitt der ersten Filterlage in Richtung der Durchströmungsrichtung der ersten Filterlage stetig zunimmt.

Gemäß einer weiteren Ausführungsform sind die ersten Fasern und die zweiten Fasern in dem Mittelabschnitt so angeordnet, dass ein Anteil der zweiten Fasern an der Summe der ersten Fasern und zweiten Fasern auf einem Tiefenabschnitt der ersten Filterlage in Richtung der Durchströmungsrichtung der ersten Filterlage konstant zunimmt.

Zu der stetigen und konstanten Zunahme der Anzahl der zweiten Fasern an der Summe der ersten Fasern und zweiten Fasern auf einem Tiefenabschnitt wird sinngemäß auf die Erläuterungen der stetigen und konstanten Zunahme bzw. Abnahme der Packungsdichte bzw. Porosität verwiesen, welche für die Anordnung der ersten und zweiten Fasern mit ihren jeweiligen voneinander abweichenden Querschnitten sinngemäß in analoger Weise gelten.

Gemäß einer weiteren Ausführungsform nimmt eine Packungsdichte des Mittelabschnitts in Richtung der Durchströmungsrichtung der ersten Filterlage zu.

Im Falle, dass die Packungsdichte des Mittelabschnitts über Fasern mit verschiedenem Querschnitt realisiert wird, gilt dabei das zuvor Gesagte betreffend die ersten Fasern und zweiten Fasern, die einen abnehmenden bzw. zunehmenden Anteil an der Summe der ersten und zweiten Fasern auf einem Tiefenabschnitt in Durchströmungsrichtung haben.

Gemäß einer weiteren Ausführungsform ist der zweite Filterlagenabschnitt kalandriert.

Beim Kalandrieren erfolgt eine mechanische Druckbeaufschlagung auf eine Oberfläche, d. h. in diesem Fall auf die Oberfläche des zweiten Filterlagenabschnittes, um so eine Verdichtung der Fasern zu erzielen. Durch das Kalandrieren wird somit die Packungsdichte des zweiten Filterlagenabschnittes erhöht und die Porosität im Gegenzug reduziert.

Gemäß einer weiteren Ausführungsform weist der erste Filterlagenabschnitt zumindest eine erste Faser mit einem ersten Querschnitt und der zweite Filterlagenabschnitt zumindest eine zweite Faser mit einem zweiten Querschnitt auf, wobei der zweite Querschnitt kleiner ist als der erste Querschnitt.

Damit kann sowohl die erste Faser als auch die zweite Faser von beliebiger geometrischer Form sein, z. B. ein prismatischer Körper mit einer elliptischen oder sonstigen Grundform.

Gemäß einer weiteren Ausführungsform hat die erste Filterlage eine Materialdicke zwischen ungefähr 0,2 mm bis ungefähr 0,9 mm und vorzugsweise zwischen 0,3 mm und 0,7 mm.

Die erste Filterlage kann ein gradierter Zelluloseträger sein.

Gemäß einer weiteren Ausführungsform weist das Luftfiltermedium eine Luftdurchlässigkeit von ungefähr 100 1/m$^2$s bis ungefähr 1000 l/m$^2$s bei 200 Pa auf.

Gemäß einer weiteren Ausführungsform weist das Luftfiltermedium ein Flächengewicht von ungefähr 80 g/m$^2$ bis ungefähr 200 g/m$^2$ nach Imprägnierung und Aushärtung auf.

Das Imprägnieren einer Filterlage kann beispielsweise mit Phenolharz, Acrylharz, Epoxydharz erfolgen und kann insbesondere eine flammenhemmende Wirkung haben.

Gemäß einer weiteren Ausführungsform der Erfindung kann die erste Filterlage ein gradierter, mehrlagiger Zellulose-Synthetikträger mit einer Materialdicke in Durchströmungsrichtung von 0,4 mm bis 0,9 mm, einer Luftdurchlässigkeit von 200 l/m$^2$s bis 1000 l/m$^2$s, und einem Flächengewicht nach Imprägnierung und Aushärtung von 100 g/m$^2$ bis 200 g/m$^2$ sein.

Gemäß einer weiteren Ausführungsform der Erfindung kann die erste Filterlage ein Krempelvlies und eine naßgelegte Vlieslage, welche vernadelt und miteinander verklebt sind, aufweisen. Das Krempelvlies kann mehrlagig sein und einen Bico-Faseranteil in einem Filterlagenabschnitt an einer Oberfläche der Abströmfläche von größer ungefähr 5 % an der Masse dieses Filterlagenabschnittes haben. Die Faserfeinheit kann bis zu 1,5 Denier sein. Bei Wasserstrahlverfestigung können Faserfeinheiten von 0,5 bis 50 dtex erreicht werden. Die Materialdicke der ersten Filterlage dieser Ausführungsform kann zwischen 1,0 mm und 4,0 mm bei einer Luftdurchlässigkeit von 400 l/m$^2$s und 1500 l/m$^2$s und einem Flächengewicht zwischen 200 g/m$^2$ und 400 g/m$^2$ sein.

Die Dicke des Luftfiltermediums ist proportional zu der Schmutzpartikelspeicherkapazität des Luftfiltermediums dahingehend, dass eine zunehmende Dicke auch die Schmutzpartikelspeicherkapazität erhöht.

Gemäß einer weiteren Ausführungsform weist die erste Filterlage zellulosebasierte Fasern, synthetische Fasern wie PET, PBT, PA, Bico-Fasern, Glasfasern oder ein Kombination davon auf.

In einer Ausführungsform kann der Bico-Faseranteil in dem zweiten Filterlagenabschnitt größer als ungefähr 5 % der Masse des zweiten Filterlagenabschnittes sein.

Bei der Bico-Faser handelt es sich um eine Zwei-Komponenten-Faser, die aus einer hochtemperaturschmelzenden Komponente (Faserkern) und einer niedertemperaturschmelzenden Komponente (Fasermantel) besteht, und welche bevorzugt als Schmelzbindefaser eingesetzt wird, indem die Bico-Faser auf eine Temperatur über dem Schmelzpunkt der niedertemperaturschmelzenden Komponente und unter dem Schmelzpunkt der hochtemperaturschmelzenden Komponente erhitzt wird, so dass die niedertemperaturschmelzende Komponente schmilzt und während des Abkühlens und Aushärtens die Fasern miteinander verklebt.

Gemäß einer weiteren Ausführungsform weist der zweite Filterlagenabschnitt, also der Feinfilter der ersten Filterlage, der an die zweite Filterlage angrenzt, Fasern mit einer Faserfeinheit von ungefähr 0,5 dtex bis ungefähr 50 dtex, vorzugsweise von ungefähr 1 dtex bis ungefähr 15 dtex, auf.

Gemäß einer weiteren Ausführungsform weist der zweite Filterlagenabschnitt Fasern mit einer Faserfeinheit von unter ungefähr 2 Denier auf.

Gemäß einer weiteren Ausführungsform weist die zweite Filterlage eine Faser mit einem Faserdurchmesser zwischen ungefähr 50 nm und ungefähr 500 nm und insbesondere zwischen 100 nm und 300 nm auf.

Gemäß einer weiteren Ausführungsform ist die die zweite Filterlage ein PA Polymer, ein PA 6 Polymer, ein PA 6.10 Polymer oder ein PA 66 Polymer.

Gemäß einer weiteren Ausführungsform sind die erste Filterlage und die zweite Filterlage mittels eines Klebstoffes, insbesondere mittels eines Dispersionsklebstoffes mechanisch miteinander gekoppelt, d. h. miteinander verklebt.

Der Klebstoff wird als Haftvermittler mit 0,5 g/m$^2$ bis 5,0 g/m$^2$, vorzugsweise 1 g/m$^2$ bis 2 g/m$^2$ aufgetragen. Eine geringe Auftragsmenge kann dabei die Gefahr eines elektrischen Durchschlags während der Produktion vermindern, da eine geringere Spannung einsetzbar ist. Ebenso kann durch eine geringe Auftragsmenge einem Porenverschluss vorgebeugt werden.

Der Klebstoff kann durch Sprühen oder durch Walzen aufgetragen werden.

Bei dem Dispersionsklebstoff kann es sich um Polyurethan, Vinylacetat, Ethylen, Polyvinylacetat, Butyl-Diglycol-Acetat, Copolymer, Acrylsäureester oder eine Kombination hiervon handeln.

Gemäß einer weiteren Ausführungsform weist der erste Filterlagenabschnitt eine Faser mit einem Faserdurchmesser zwischen ungefähr 15 μm und ungefähr 40 μm auf.

Gemäß einer weiteren Ausführungsform der Erfindung weist der zweite Filterlagenabschnitt eine Faser mit einem Faserdurchmesser zwischen ungefähr 8 μm und ungefähr 14 μm auf.

Gemäß einer weiteren Ausführungsform weist das Luftfiltermedium eine dritte Filterlage auf, wobei die dritte Filterlage in Durchströmungsrichtung vor der ersten Filterlage angeordnet ist.

Die dritte Filterlage führt damit eine Vorfilterung durch.

Gemäß einer weiteren Ausführungsform weist die dritte Filterlage eine Spunbondlage oder eine Meltblownlage auf.

Gemäß einer weiteren Ausführungsform ist die dritte Filterlage durch ein Kreuzlageverfahren auf der ersten Filterlage angeordnet.

Gemäß einer weiteren Ausführungsform weist die erste Filterlage eine Spunbondlage oder eine Meltblownlage auf.

Gemäß einer weiteren Ausführungsform ist die erste Filterlage ein kardiertes Vlies.

Bei dem Kardieren handelt es sich um ein Verfahren zur Herstellung eines Vlieses, im Rahmen dessen die losen Fasern ausgerichtet werden.

Gemäß einer weiteren Ausführungsform weist das Luftfiltermedium eine vierte Filterlage auf, wobei die vierte Filterlage in Durchströmungsrichtung vor der dritten Filterlage angeordnet ist und wobei die vierte Filterlage mit der dritten Filterlage und/oder die dritte Filterlage mit der ersten Filterlage mechanisch durch Vernadelung verbunden sind.

Gemäß einer weiteren Ausführungsform ist die erste Filterlage und/oder die zweite Filterlage und/oder die dritte Filterlage und/oder die vierte Filterlage durch Thermofusion thermisch verfestigt.

Gemäß einer weiteren Ausführungsform ist zumindest eine Oberfläche der ersten Filterlage und/oder der dritten Filterlage und/oder der vierten Filterlage kalandriert.

Das Kalandrieren ermöglicht eine Anpassung der Packungsdichte der kalandrierten Filterlage.

Gemäß einer weiteren Ausführungsform ist die kalandrierte Oberfläche der ersten Filterlage und/oder der dritten Filterlage und/oder der vierten Filterlage in Durchströmungsrichtung auf einer Rückseite der jeweiligen Filterlage angeordnet.

Dies bedeutet, dass die kalandrierte Oberfläche der Reinseite zugewandt ist und eine höhere Packungsdichte sowie eine geringere Porosität aufweist, um einen geforderten Partikelgehalt auf der Reinseite nicht zu überschreiten.

Damit ist der Faserdurchmesser bzw. die Faserfeinheit der Fasern der vierten Filterlage größer als der Faserdurchmesser bzw. die Faserfeinheit der Fasern der dritten Filterlage. Somit können diese Fasern über die vierte Filterlage und die dahinter angeordnete dritte Filterlage so angeordnet werden, dass eine zunehmende Packungsdichte und eine abnehmende Porosität über das gesamte Luftfiltermedium erreicht werden.

Diese Fasern können insbesondere so angeordnet sein, dass die Fasern mit einer höheren Faserfeinheit einen höheren Anteil an der Summe der Fasern in einem Tiefenabschnitt näher der Reinluftseite haben als in einem Tiefenabschnitt weiter weg von der Reinluftseite, wie weiter oben detailliert beschrieben.

Gemäß einer weiteren Ausführungsform weist die erste Filterlage Fasern mit einer Faserfeinheit zwischen ungefähr 1,5 Denier und ungefähr 2 Denier oder mit einem Faserdurchmesser zwischen ungefähr 12 μm und ungefähr 14 μm

Gemäß einer weiteren Ausführungsform weist zumindest eine der ersten Filterlage, der zweiten Filterlage, der dritten Filterlage oder der vierten Filterlage Schmelzfasern mit einem Anteil von ungefähr 5 % bis ungefähr 50 % an einer Masse der jeweiligen Filterlage auf.

Bei den Schmelzfasern kann es sich beispielsweise um ein Co-Polyester mit einem Schmelzpunkt zwischen 110° C und 120° C handeln, welche durch die entsprechende Temperatur zum Schmelzen gebracht werden, um so für eine Verfestigung der anderen Fasern mit Bezug zueinander zu sorgen. Die übrigen Schmelzfasern können beispielsweise einen Schmelzpunkt zwischen 220° C und 250° C aufweisen, so dass diese bei der Schmelztemperatur der Schmelzfasern nicht schmelzen.

Gemäß einer weiteren Ausführungsform ist das Luftfiltermedium als Faltenfilter ausgeführt.

Ein gefaltetes Filtermedium weist eine Vielzahl von Falten auf, um die Oberfläche des Luftfiltermediums bei reduziertem Bauraum zu vergrößern, wodurch sich auch die Lebensdauer eines Luftfilterelementes verlängert, da eine größere Filteroberfläche bzw. eine vergrößerte Schmutzpartikelspeicherkapazität mehr Schmutzpartikel aufnehmen kann, bevor der durch abgeschiedenen Staub verursachte Druckverlust am Filtermedium derart angestiegen ist, dass eine erhöhte Leistung für das Ansaugen von Luft durch das Luftfiltermedium erforderlich ist.

Dabei kann das Luftfiltermedium mit sämtlichen Filterlagen gefaltet sein.

Gemäß einer weiteren Ausführungsform ist das Luftfiltermedium als ein Faltenfilter mit variabler Faltentiefe ausgeführt.

Das Luftfiltermedium kann bevorzugterweise in einem Gehäuse angeordnet sein, wobei das Gehäuse auf Grund von externen Bauraumanforderungen in einer vorgegebenen Art und Weise geformt sein kann. Ebenso kann in dem Gehäuse ein Funktionsbauteil, beispielsweise in Form eines Zusatzfilterelementes angeordnet sein.

Weiterhin kann die bauliche Gestaltung des Gehäuses an äußere Gegebenheiten, z. B. die Platzverhältnisse in einem Motorraum eines Fahrzeugs, angepasst sein. Die bauliche Gestaltung des Gehäuses hat unmittelbaren Einfluss auf die Größe und die Form des Luftfiltermediums und damit auch auf die Filterleistung des Luftfiltermediums.

So kann das Luftfiltermedium beispielsweise ein Element mit variabler Faltentiefe sein, um die äußere Form des Luftfiltermediums an die baulichen Anforderungen in einem Gehäuse anzupassen.

Die Filterlagen wie oben und im Folgenden beschrieben können aus mehreren Filterlagenabschnitten ausgeführt sein, die mechanisch beispielsweise über Vernadelung oder Wasserstrahlverfestigung, thermisch oder chemisch beispielsweise mit Kleber, insbesondere über eine Sprühverklebung, insbesondere mit PU, oder über eine Imprägnierung miteinander verbunden sind.

Die Lagenherstellung kann dabei naßgelegt oder trockengelegt, beispielsweise als Krempelvlies, oder in Form von Filamentspinnvlies, insbesondere mittels Spunbond oder mittels Meltblown erfolgen.

Die erste Filterlage und/oder das Luftfiltermedium wie oben und im Folgenden beschrieben kann einen Packungsdichtegradienten und/oder einen Faserdurchmessergradienten aufweisen.

In einer Ausführungsform weist das Luftfiltermedium einen sog. Spunbond-Nanofaser-Aufbau mit der Nanofaserlage auf der Abströmseite des Luftfiltermediums auf.

Dabei kann das Luftfiltermedium eine oder mehrere synthetische Filterlagen aufweisen, welche miteinander kombiniert sind. Mindestens eine dieser synthetischen Filterlagen kann entsprechend dem Spunbond-Herstellungsverfahren hergestellt werden. Eine weitere Lage besteht aus Nanofasern.

Um das Ausbilden von sog. Sperrschichten oder Schmutzbarrieren zu verhindern oder zu reduzieren, weist das Luftfiltermedium einen Packungsdichtegradienten in der Form auf, dass eine sprunghafte Veränderung einer dieser beiden Parameter im Wesentlichen verhindert wird.

Durch die Verbindung einer Spunbond-Filterlage mit einer Nanofaserfilterlage kann das Ausbilden von Sperrschichten reduziert werden, indem die Porosität oder die Packungsdichte der Filterlagen, die in Durchströmungsrichtung vor dem Nanofaserfilter angeordnet sind, in Richtung des Nanofaserfilters so angepasst wird, dass an den aneinander angrenzenden Oberflächen der ersten Filterlage und der Nanofaserfilterlage eine im Wesentlichen gleiche Porosität oder Packungsdichte vorliegt bzw. dass ein vorgegebener Wert durch den Unterschied der entsprechenden Parameter dieser Schichten nicht überschritten wird.

Über diese Kombination wird eine Gadientenstruktur im Luftfiltermedium erzeugt, die in Bezug auf Staubspeicherkapazität und Abscheidegrad von Schmutzpartikeln Vorteile bieten kann. Die besagte Gradientenstrukter beginnt auf der Anströmseite mit einem offenen, porösen Material und wird in Durchströmungsrichtung immer dichter und weniger porös. Auch die Faserdurchmesser können von der Anströmseite zur Abströmseite hin abnehmen. Dabei kann die Spunbondlage als Grobfiltrationsschicht und hauptsächlich als Staubspeicherschicht verwendet werden. Die abströmseitig angeordnete Nanofaserschicht kann als Feinstfiltrationsschicht dienen und genutzt werden, um einen geforderten Abscheidgrad der Schmutzpartikel zu erfüllen.

Wie bereits dargestellt kann die Gradientenstruktur auch innerhalb der Spunbondlage generiert werden, indem beispielsweise eine einseitige Verdichtung oder Glättung der Fasern erfolgt. Dies kann beispielsweise durch Vernadelung, durch Thermofusion, durch Wasserstrahlverdichtung und/oder durch Kalandrierung erzeugt werden.

Darüber hinaus ist es auch vorstellbar, mehrere Spunbondlagen miteinander zu kombinieren, so dass die Gradientenstruktur noch exakter ausgebildet werden kann und insbesondere keine Porositäts- oder Dichtesprünge von einer Schicht zur nächsten erzeugt werden, indem die Porositäten oder Packungsdichten an aneinander angrenzenden Oberflächen benachbarter Spunbondlagen gleich oder nahezu gleich sind. Das heißt, dass von der Anströmseite her zunächst eine relativ offene Faserschicht mit Fasern mit großem Durchmesser, gefolgt von einer dichteren Faserschicht mit Fasern mit geringerem Durchmesser als die vorhergehende Schicht angeordnet sind. Somit können hier z. B. S-S-NF (zwei Spunbondlagen gefolgt von einer Nanofaserlage) oder S-S-S-NF (drei Spunbondlagen gefolgt von einer Nanofaserlage) Kombinationen erzeugt werden. Diese Spunbond-Schichten können einzeln produziert werden und anschließend in einem folgenden Arbeitsschritt miteinander verbunden werden, z. B. durch Vernadelung, durch Thermofusion, durch Wasserstrahlverdichtung und/oder durch Kalandrierung.

Alternativ kann eine einzelne integrale Spunbondschicht in einem einzelnen Arbeitsgang erzeugt, in dem zwei oder mehr Sprühbalken hintereinander angeordnet werden. Diese erzeugen dann zunächst Fasern mit großem Durchmesser und dann immer feinere oder umgekehrt.

In einer Ausführungsform weist das Luftfiltermedium einen sog. Spunbond-Meltblown-Nanofaser-Aufbau mit der Nanofaserlage auf der Abströmseite des Luftfiltermediums auf.

Die Spunbondlage wird entsprechend dem Spunbond-Herstellprozess hergestellt, eine zweite Lage nach dem Meltblown-Verfahren und eine dritte Lage besteht aus Nanofasern. Für die Packungsdichte an aneinander angrenzenden Oberflächen der verschiedenen Lagen gilt das oben Geschriebene analog, d. h. dass diese Werte nahezu gleich sind um das Ausbilden von Schmutzbarrieren zu vermeiden oder zu reduzieren.

Dabei wird die Spunbondlage als Grobfiltrationsschicht und hauptsächlich als Staubspeicherschicht verwendet. Die abströmseitig angeordnete Nanofaserschicht dient als Feinstfiltrationsschicht und wird genutzt, um den entsprechenden Abscheidgrad zu erfüllen. Dazwischen, um eine homogene Gradientestruktur zu realisieren wird eine Meltblownschicht angeordnet.

Eine Anordnung der drei Schichten ist somit die Kombination S-M-NF, eine Spunbondlage gefolgt von einer Meltblownlage, weiterhin gefolgt von einer Nanofaserlage, jeweils in Richtung von der Anströmseite zu der Abströmseite in Richtung der Durchströmungsrichtung.

Es können auch Strukturen wie folgt aufgebaut werden: S-S-M-NF (zwei aufeinader folgende Spunbondlagen, gefolgt von einer Meltblownlage und von einer Nanofaserlage) oder S-S-S-M-NF (drei aufeinander folgende Spunbondlagen gefolgt von einer Meltblownlage und einer Nanofaserlage).

In einer Ausführungsform wird ein Gradientenfiltermedium zusammen mit einer Nanofaserlage in einem sog. X-NF-Aufbau mit der Nanofaserlage auf der Abströmseite genutzt.

Bei der X-Lage kann es sich auch um die Kombinationen mehrere Filterlagen handeln, beispielsweise Krempelvlies mit Krempelvlies oder Krempelvlies mit naßgelegtem Vlies. Diese Kombinationen können eine Gradientenstruktur betreffend ihre Porosität oder ihre Packungsdichte wie oben und im Folgenden beschrieben dahingehend aufweisen, dass sie auf der Anströmseite sehr offenporig sind und auf der Abströmseite eine verdichtete Struktur aufweisen.

Es ist aber auch denkbar, Vliese, die in der verdichteten Struktur Splittfaseranteile aufweisen, einzusetzen, um einen erhöhten Abscheidegrad der Schmutzpartikel aus der Rohluft zu erreichen. In dieser Ausführungsform erfolgt also eine Kombination der offenporigen und verdichteten Struktur mit einer Nanofaserfilterlage. Über diese Kombination kann eine zusätzliche Verfeinerung der Gradientenstruktur im Filtermedium erzeugt werden, die in Bezug auf Staubspeicherkapazität und Abscheidegrad der Schmutzpartikel aus der Rohluft Vorteile generieren kann. Diese Gradientenstrukter beginnt auf der Anströmseite mit einem offenen, porösen Material und wird in Durchströmungsrichtung immer dichter und weniger porös. Auch die Faserdurchmesser können von der Anströmseite zu der Abströmseite hin abnehmen. Dabei wird die anströmseitige Vlieslage als Grobfiltrationsschicht und hauptsächlich als Staubspeicherschicht verwendet. Die abströmseitig angeordnete Nanofaserschicht dient als Feinstfiltrationsschicht und wird genutzt, um einen vorgegebenen Abscheidegrad zu erfüllen. Die anströmseitige Vlieslage kann aus Krempelvlies, naßgelegtem Vlies oder aus Kombinationen dieser Vlieslagen bestehen.

Die Gradientenstruktur kann darüber hinaus auch innerhalb der anströmseitigen Vlieslage generiert werden, indem durch geeignete Verfahren eine einseitige Verdichtung der Fasern oder Glättung der Lage und Verfestigung erreicht wird. Dies kann beispielsweise durch Vernadelung, durch Thermofusion, durch Wasserstrahlverdichtung, durch Bindemittel (chem. Ausrüstung) und/oder durch Kalandrierung erzeugt werden.

In einer Ausführungsform können die anströmseitige Vlieslage und die Nanofaserlage in einem Arbeitsgang erzeugt werden.

Gemäß einem weiteren Aspekt ist ein Luftfilter mit einem Luftfiltermedium wie oben und im Folgenden beschrieben angegeben.

Bei dem Luftfilter kann es sich insbesondere um einen Luftfilter für die Filterung von Zuluft für eine Verbrennungskraftmaschine handeln.

Aspekte der Erfindung

Gemäß Aspekt 1 weist ein Filtermedium eines Luftfilterelementes gemäß Anspruch 1 eine erste Filterlage und eine zweite Filterlage auf, wobei die erste Filterlage einen ersten Filterlagenabschnitt und einen zweiten Filterlagenabschnitt, der in einer Durchströmungsrichtung des Filtermediums hinter dem ersten Filterlagenabschnitt angeordnet ist, aufweist, wobei der erste Filterlagenabschnitt eine erste Packungsdichte von Fasern aufweist und wobei der zweite Filterlagenabschnitt eine von der ersten Packungsdichte von Fasern abweichende zweite Packungsdichte von Fasern aufweist. Dabei weist die zweite Filterlage Nanofasern auf und ist in Durchströmungsrichtung hinter der ersten Filterlage angeordnet.

Gemäß Aspekt 2 ist ein Filtermedium nach Aspekt 1 angegeben, wobei die erste Filterlage einen Mittelabschnitt aufweist, der in Durchströmungsrichtung zwischen dem ersten Filterlagenabschnitt und dem zweiten Filterlagenabschnitt angeordnet ist.

Gemäß Aspekt 3 ist ein Filtermedium nach einem der Aspekte 1 oder 2 angegeben, wobei die erste Filterlage einen Anströmtiefenabschnitt aufweist und der erste Filterlagenabschnitt in Durchströmungsrichtung hinter dem Anströmtiefenabschnitt angeordnet ist.

Gemäß Aspekt 4 ist ein Filtermedium nach einem der vorhergehenden Aspekte angegeben, wobei der Anströmtiefenabschnitt an der ersten Oberfläche des Filtermediums angeordnet ist.

Gemäß Aspekt 5 ist ein Filtermedium nach einem der vorhergehenden Aspekte angegeben, wobei die erste Filterlage einen Abströmtiefenabschnitt aufweist und der zweite Filterlagenabschnitt in Durchströmungsrichtung vor dem Abströmtiefenabschnitt angeordnet ist.

Gemäß Aspekt 6 ist ein Filtermedium nach einem der vorhergehenden Aspekte angegeben, wobei die zweite Filterlage auf einer Abströmfläche des Filtermediums angeordnet ist.

Gemäß Aspekt 7 ist ein Filtermedium nach einem der vorhergehenden Aspekte angegeben, wobei eine Packungsdichte von Fasern der ersten Filterlage in Durchströmungsrichtung von dem ersten Filterlagenabschnitt zu dem zweiten Filterlagenabschnitt zunimmt.

Gemäß Aspekt 8 ist ein Filtermedium nach einem der vorhergehenden Aspekte angegeben, wobei eine Packungsdichte von Fasern der ersten Filterlage in Durchströmungsrichtung von dem ersten Filterlagenabschnitt zu dem zweiten Filterlagenabschnitt stetig zunimmt.

Gemäß Aspekt 9 ist ein Filtermedium nach einem der vorhergehenden Aspekte angegeben, wobei eine Packungsdichte von Fasern der ersten Filterlage in Durchströmungsrichtung von dem ersten Filterlagenabschnitt zu dem zweiten Filterlagenabschnitt konstant zunimmt.

Gemäß Aspekt 10 ist ein Filtermedium nach einem der vorhergehenden Aspekte angegeben, wobei der erste Filterlagenabschnitt eine erste Porosität und der zweite Filterlagenabschnitt eine zweite Porosität aufweist, wobei ein Wert der zweiten Porosität kleiner ist als ein Wert der ersten Porosität.

Gemäß Aspekt 11 ist ein Filtermedium nach einem der vorhergehenden Aspekte angegeben, wobei eine Porosität der ersten Filterlage in Durchströmungsrichtung von dem ersten Filterlagenabschnitt zu dem zweiten Filterlagenabschnitt abnimmt.

Gemäß Aspekt 12 ist ein Filtermedium nach einem der vorhergehenden Aspekte angegeben, wobei eine Porosität der ersten Filterlage in Durchströmungsrichtung von dem ersten Filterlagenabschnitt zu dem zweiten Filterlagenabschnitt stetig abnimmt.

Gemäß Aspekt 13 ist ein Filtermedium nach einem der vorhergehenden Aspekte angegeben, wobei eine Porosität der ersten Filterlage in Durchströmungsrichtung von dem ersten Filterlagenabschnitt zu dem zweiten Filterlagenabschnitt konstant abnimmt.

Gemäß Aspekt 14 ist ein Filtermedium nach einem der vorhergehenden Aspekte angegeber, wobei eine erste Oberfläche der zweiten Filterlage unmittelbar an der ersten Filterlage anliegt.

Gemäß Aspekt 15 ist ein Filtermedium nach einem der vorhergehenden Aspekte angegeben, wobei eine Packungsdichte des zweiten Filterlagenabschnitts größer ist als eine Packungsdichte der zweiten Filterlage.

Gemäß Aspekt 16 ist ein Filtermedium nach einem der Aspekte 1 bis 14 angegeben, wobei eine Packungsdichte des zweiten Filterlagenabschnitts von einer Packungsdichte der zweiten Filterlage um höchstens ungefähr 15 %, vorzugsweise um höchstens 10 % und weiter vorzugsweise um höchstens 5 % abweicht.

Gemäß Aspekt 17 ist ein Filtermedium nach einem der vorhergehenden Aspekte angegeben, wobei der erste Filterlagenabschnitt erste Fasern mit einem ersten Querschnitt aufweist, wobei der zweite Filterlagenabschnitt zweite Fasern mit einem zweiten Querschnitt aufweist, wobei der Mittelabschnitt erste Fasern und zweite Fasern aufweist.

Gemäß Aspekt 18 ist ein Filtermedium nach Aspekt 17 angegeben, wobei die ersten Fasern und die zweiten Fasern in dem Mittelabschnitt so angeordnet sind, dass ein Anteil der zweiten Fasern an der Summe der ersten Fasern und zweiten Fasern auf einem Tiefenabschnitt der ersten Filterlage in Richtung der Durchströmungsrichtung der ersten Filterlage zunimmt.

Gemäß Aspekt 19 ist ein Filtermedium nach einem der Aspekte 17 oder 18 angegeben, wobei die ersten Fasern und die zweiten Fasern in dem Mittelabschnitt so angeordnet sind, dass ein Anteil der zweiten Fasern an der Summe der ersten Fasern und zweiten Fasern auf einem Tiefenabschnitt der ersten Filterlage in Richtung der Durchströmungsrichtung der ersten Filterlage stetig zunimmt.

Gemäß Aspekt 20 ist ein Filtermedium nach einem der Aspekte 17 bis 19 angegeben, wobei die ersten Fasern und die zweiten Fasern in dem Mittelabschnitt so angeordnet sind, dass ein Anteil der zweiten Fasern an der Summe der ersten Fasern und zweiten Fasern auf einem Tiefenabschnitt der ersten Filterlage in Richtung der Durchströmungsrichtung der ersten Filterlage konstant zunimmt.

Gemäß Aspekt 21 ist ein Filtermedium nach einem der Aspekte 2 bis 20 angegeben, wobei eine Packungsdichte des Mittelabschnitts in Richtung der Durchströmungsrichtung der ersten Filterlage zunimmt.

Gemäß Aspekt 22 ist ein Filtermedium nach einem der vorhergehenden Aspekte angegeben, wobei der zweite Filterlagenabschnitt kalandriert ist.

Gemäß Aspekt 23 ist ein Filtermedium nach einem der vorhergehenden Aspekte angegeben, wobei der erste Filterlagenabschnitt zumindest eine erste Faser mit einem ersten Querschnitt aufweist, wobei der zweite Filterlagenabschnitt zumindest eine zweite Faser mit einem zweiten Querschnitt aufweist, wobei der zweite Querschnitt kleiner ist als der erste Querschnitt.

Gemäß Aspekt 24 ist ein Filtermedium nach einem der vorhergehenden Aspekte angegeben, wobei die erste Filterlage eine Materialdicke in Richtung der Durchströmungsrichtung zwischen ungefähr 0,2 mm bis ungefähr 0,9 mm, vorzugsweise 0,3 mm bis 0,7 mm, aufweist.

Gemäß Aspekt 25 ist ein Filtermedium nach einem der vorhergehenden Aspekte angegeben, wobei die erste Filterlage eine Luftdurchlässigkeit von ungefähr 100 l/m$^2$s bis ungefähr 1000 l/m$^2$s bei 200 Pa aufweist.

Gemäß Aspekt 26 ist ein Filtermedium nach einem der vorhergehenden Aspekte angegeben, wobei die erste Filterlage ein Flächengewicht von ungefähr 80 g/m² bis ungefähr 200 g/m² aufweist.

Gemäß Aspekt 27 ist ein Filtermedium nach einem der Aspekte 1 bis 23 angegeben, wobei die erste Filterlage ein gradierter, mehrlagiger Zellulose-Synthetikträger mit einer Materialdicke in Durchströmungsrichtung von 0,4 mm bis 0,9 mm, einer Luftdurchlässigkeit von 200 l/m²s bis 1000 l/m²s, und einem Flächengewicht nach Imprägnierung und Aushärtung von 100 g/m² bis 200 g/m² ist.

Gemäß Aspekt 28 ist ein Filtermedium nach einem der Aspekte 1 bis 23 angegeben, wobei das Filtermedium eine Dicke zwischen ungefähr 1,0 mm und ungefähr 4,0 mm hat.

Gemäß Aspekt 29 ist ein Filtermedium nach Aspekt 28 angegeben, wobei das Filtermedium eine Luftdurchlässigkeit von ungefähr 400 l/m²s und ungefähr 1500 l/m²s hat.

Gemäß Aspekt 30 ist ein Filtermedium nach einem der Aspekte 28 oder 29 angegeben, wobei das Filtermedium ein Flächengewicht von ungefähr 200 g/m² und ungefähr 400 g/m² hat.

Gemäß Aspekt 31 ist ein Filtermedium nach einem der Aspekte 28 bis 30 angegeben, wobei der zweite Filterlagenabschnitt Fasern mit einer Faserfeinheit von ungefähr 0,05 dtex bis ungefähr 50 dtex aufweist.

Gemäß Aspekt 32 ist ein Filtermedium nach einem der Aspekte 28 bis 31 angegeben, wobei der zweite Filterlagenabschnitt Fasern mit einer Faserfeinheit von unter ungefähr 2 Denier aufweist.

Gemäß Aspekt 33 ist ein Filtermedium nach einem der vorhergehenden Aspekte angegeben, wobei die zweite Filterlage eine Faser mit einem Faserdurchmesser zwischen ungefähr 50 nm und ungefähr 500 nm, vorzugsweise 100 nm bis 300 nm aufweist.

Gemäß Aspekt 34 ist ein Filtermedium nach einem der vorhergehenden Aspekte angegeben, wobei die zweite Filterlage ein PA Polymer, insbesondere ein PA 6, PA 6.10 oder PA 66 Polymer, aufweist.

Gemäß Aspekt 35 ist ein Filtermedium nach einem der vorhergehenden Aspekte angegeben, wobei die erste Filterlage und die zweite Filterlage mittels eines Klebstoffes, insbesondere mittels eines Dispersionsklebstoffes, miteinander verklebt sind.

Gemäß Aspekt 36 ist ein Filtermedium nach einem der vorhergehenden Aspekte angegeben, wobei der erste Filterlagenabschnitt eine Faser mit einem Faserdurchmesser zwischen ungefähr 12 μm und ungefähr 40 μm aufweist.

Gemäß Aspekt 37 ist ein Filtermedium nach einem der vorhergehenden Aspekte angegeben, wobei der zweite Filterlagenabschnitt eine Faser mit einem Faserdurchmesser zwischen ungefähr 8 μm und ungefähr 14 μm aufweist.

Gemäß Aspekt 38 ist ein Filtermedium nach einem der vorhergehenden Aspekte angegeben, wobei die erste Filterlage zellulosebasierte Fasern, synthetische Fasern wie PET, PBT, PA, Bico-Fasern, Glasfasern oder ein Kombination davon aufweist.

Gemäß Aspekt 39 ist ein Filtermedium nach einem der vorhergehenden Aspekte angegeben, weiterhin aufweisend eine dritte Filterlage, wobei die dritte Filterlage in Durchströmungsrichtung vor der ersten Filterlage angeordnet ist.

Gemäß Aspekt 40 ist ein Filtermedium nach Aspekt 39 angegeben, wobei die dritte Filterlage eine Spunbondlage oder eine Meltblownlage aufweist.

Gemäß Aspekt 41 ist ein Filtermedium nach einem der Aspekte 39 oder 40 angegeben, wobei die dritte Filterlage durch ein Kreuzlageverfahren auf der ersten Filterlage angeordnet ist.

Gemäß Aspekt 42 ist ein Filtermedium nach einem der vorhergehenden Aspekte angegeben, weiterhin aufweisend eine vierte Filterlage (160), wobei die vierte Filterlage in Durchströmungsrichtung vor der dritten Filterlage angeordnet ist, wobei die vierte Filterlage mit der dritten Filterlage und/oder die dritte Filterlage mit der ersten Filterlage mechanisch durch Vernadelung verbunden sind.

Gemäß Aspekt 43 ist ein Filtermedium nach einem der vorhergehenden Aspekte angegeben, wobei die erste Filterlage und/oder die zweite Filterlage und/oder die dritte Filterlage und/oder die vierte Filterlage durch Thermofusion thermisch verfestigt sind.

Gemäß Aspekt 44 ist ein Filtermedium nach einem der vorhergehenden Aspekte angegeben, wobei zumindest eine Oberfläche der ersten Filterlage und/oder der dritten Filterlage und/oder der vierten Filterlage kalandriert ist.

Gemäß Aspekt 45 ist ein Filtermedium nach einem der vorhergehenden Aspekte angegeben, wobei die kalandrierte Oberfläche der ersten Filterlage und/oder der dritten Filterlage und/oder der vierten Filterlage in Durchströmungsrichtung auf einer Rückseite der jeweiligen Filterlage angeordnet ist.

Gemäß Aspekt 46 ist ein Filtermedium nach einem der vorhergehenden Aspekte angegeben, wobei zumindest eine der ersten Filterlage, der zweiten Filterlage, der dritten Filterlage oder der vierten Filterlage Schmelzfasern mit einem Anteil von ungefähr 5 % bis ungefähr 50 % an einer Masse der jeweiligen Filterlage aufweist.

Gemäß Aspekt 47 ist ein Filtermedium nach einem der vorhergehenden Aspekte angegeben, wobei die erste Filterlage eine Spunbondlage oder eine Meltblownlage aufweist.

Gemäß Aspekt 48 ist ein Filtermedium nach einem der vorhergehenden Aspekte angegeben, wobei die erste Filterlage ein kardiertes Vlies ist.

Gemäß Aspekt 49 ist ein Filtermedium nach einem der vorhergehenden Aspekte angegeben, wobei das Filtermedium als Faltenfilter ausgeführt ist.

Gemäß Aspekt 50 ist ein Filtermedium nach Aspekt 49 angegeben, wobei das Filtermedium als ein Faltenfilter mit variabler Faltentiefe ausgeführt ist.

Im Folgenden werden mit Bezug zu den Figuren Ausführungsbeispiele der Erfindung beschrieben.

Kurze Beschreibung der Figuren

Fig. 1 zeigt eine schematische Darstellung eines Luftfiltermediums gemäß einem Ausführungsbeispiel.

Fig. 2 zeigt eine schematische Darstellung von Fasern eines Luftfiltermediums gemäß einem weiteren Ausführungsbeispiel.

Fig. 3 zeigt eine schematische Darstellung eines Luftfiltermediums gemäß einem weiteren Ausführungsbeispiel.

Fig. 4A zeigt eine schematische Darstellung eines Luftfiltermediums gemäß einem weiteren Ausführungsbeispiel.

Fig. 4B zeigt eine schematische Darstellung eines Luftfiltermediums gemäß einem weiteren Ausführungsbeispiel.

Fig. 5 zeigt eine schematische Darstellung eines Luftfiltermediums gemäß einem weiteren Ausführungsbeispiel.

Fig. 6A zeigt eine schematische Darstellung eines Schnittbildes eines Luftfiltermediums gemäß einem weiteren Ausführungsbeispiel.

Fig. 6B zeigt eine schematische Darstellung eines Schnittbildes eines Luftfiltermediums gemäß einem weiteren Ausführungsbeispiel.

Fig. 6C zeigt eine schematische Darstellung eines Schnittbildes eines Luftfiltermediums gemäß einem weiteren Ausführungsbeispiel.

Fig. 7 zeigt eine schematische Darstellung des Packungsdichteverlaufs einer ersten Filterlage eines Luftfiltermediums gemäß einem weiteren Ausführungsbeispiel.

Fig. 8 zeigt eine schematische Darstellung des Packungsdichteverlaufs einer ersten Filterlage eines Luftfiltermediums gemäß einem weiteren Ausführungsbeispiel.

**Detaillierte Beschreibung von Ausführungsbeispielen**

Die Darstellungen in den Figuren sind schematisch und nicht maßstabsgetreu. Werden gleiche Bezugsziffern verwendet, betreffen diese gleiche oder ähnliche Elemente.

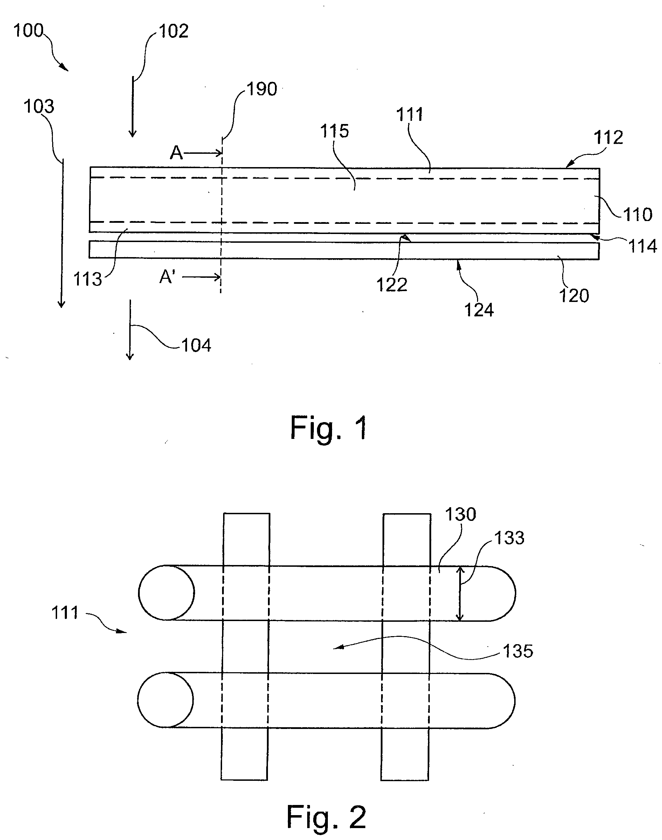

Fig. 1 zeigt ein Luftfiltermedium 100 mit einer ersten Filterlage 110 und einer zweiten Filterlage 120.

Die erste Filterlage 110 weist einen ersten Filterlagenabschnitt 111, einen zweiten Filterlagenabschnitt 113 und einen Mittelabschnitt 115 auf, wobei der Mittelabschnitt 115 in Richtung der Durchströmungsrichtung 103 hinter dem ersten Filterlagenabschnitt 111 und der zweite Filterlagenabschnitt 113 hinter dem Mittelabschnitt 115 liegt.

Die Abschnitte 111, 115, 113 sind Bestandteil einer integralen ersten Filterlage 110, d. h. dass die erste Filterlage insbesondere in einem Arbeitsgang hergestellt wurde und nicht aus mehrere Einzellagen hergestellt wurde, so dass innerhalb der ersten Filterlage oder Packungsdichtesprünge im Wesentlichen verhindert werden können. Weiterhin können sich die Abschnitte 111, 115, 113 gerade hinsichtlich der Parameter Packungsdichte sowie Packungsdichteverlauf unterscheiden, wobei der Packungsdichteverlauf in Richtung der Durchströmungsrichtung 103 eine Veränderung erfährt, insbesondere eine Erhöhung.

Die erste Filterlage 110 weist eine erste Oberfläche 112 und eine zweite Oberfläche 114 auf. Die erste Oberfläche ist als Anströmfläche des Luftfiltermediums ausgeführt, welche unmittelbar der Rohluft, die aus Richtung der Anströmrichtung 102 fließt, ausgesetzt ist.

Die zweite Oberfläche 114 grenzt an die zweite Filterlage 120 an, und zwar so dass die zweite Oberfläche 114 der ersten Filterlage 110 an einer ersten Oberfläche 122 der zweiten Filterlage 120 unmittelbar anliegt, wobei die Oberfläche 114 mit der Oberfläche 122 insbesondere verklebt sein kann.

Die zweite Filterlage 120 weist eine zweite Oberfläche 124 auf, die die Abströmfläche des Luftfiltermediums darstellt, d. h. dass diese Oberfläche 124 der Reinseite des Luftfiltermediums zugewandt ist, so dass die Reinluft das Luftfiltermedium hiervon ausgehend in Richtung der Abströmrichtung 104 verlässt. Die zu filternde Luft durchströmt das Luftfiltermedium 100 quer oder orthogonal zu den dargestellten Filterlagen und Filterlagenabschnitten.

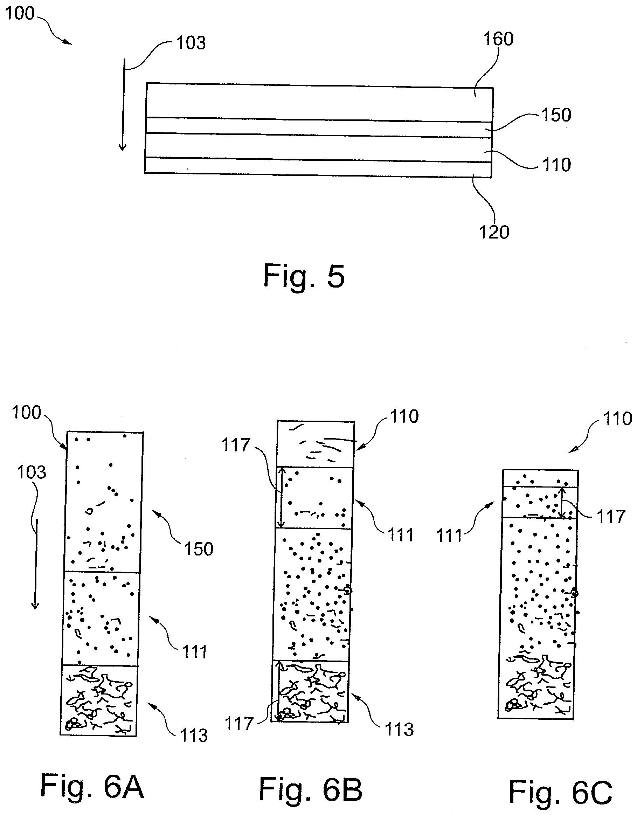

Weiterhin ist in der Fig. 1 eine Schnittlinie A-A' 190 dargestellt, welche eine Position des in den Figuren 6A, 6B und 6C gezeigten Schnittbildes andeutet.

Fig. 2 zeigt eine schematische Darstellung eines Fasergeflechts des ersten Filterlagenabschnittes 111. Gezeigt sind vier sich überlappende Fasern 130, wobei die Fasern jeweils einen Faserdurchmesser oder einen Faserquerschnitt 133 haben. Durch das Überlappen bzw. Überkreuzen der Fasern ergibt sich eine Pore 135. Die Pore wird von der zu reinigenden Luft durchströmt und Schmutzpartikel bleiben an dem Fasergeflecht hängen, sobald die Ausmaße eines Schmutzpartikels die Ausmaße der Poren übersteigen und/oder auf die Fasern auftreffen und dort anhaften.

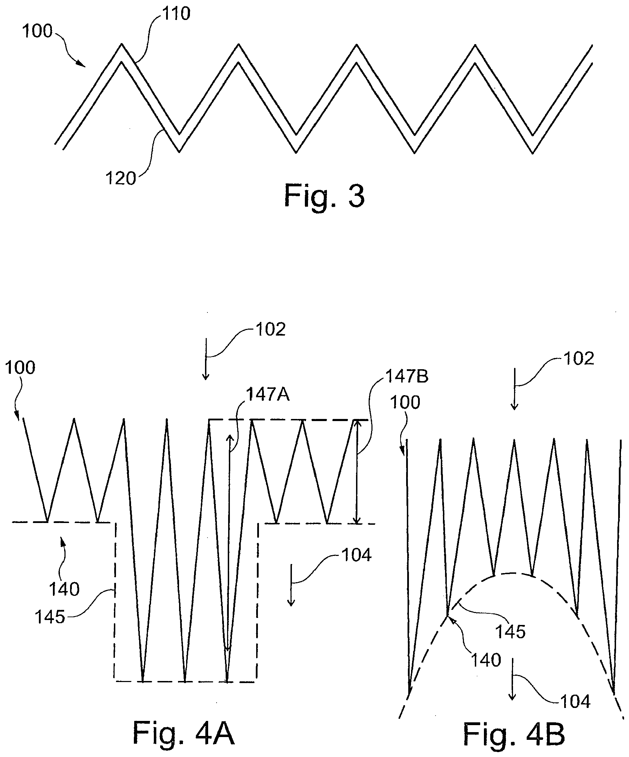

Fig. 3 zeigt ein Luftfiltermedium 100 mit einer ersten Filterlage 110 und einer zweiten Filterlage 120, wobei das Luftfiltermedium 100 als Faltenfilter ausgeführt ist und beide Filterlagen 110, 120 entsprechend gefaltet sind. Die Durchströmungsrichtung wird an Hand der Figuren 4A und 4B gezeigt.

Fig. 4A zeigt ein Luftfiltermedium 100, das als Faltenfilter mit variabler Faltentiefe 147 ausgeführt ist. Die Anströmrichtung 102 verläuft in Richtung der Faltentiefe 147. Auf der Abströmseite 104 bilden die Faltkanten 140 aller Falten des Luftfiltermediums 100 einen gestuften Verlauf 145 mit zwei verschiedenen Filterfaltentiefenbereichen 147A, 147B, wobei der gestufte Verlauf gemäß der Linie 145 beispielsweise einer Gehäuseform angepasst sein kann. Die Filterfaltentiefe 147B ist geringer als die Filterfaltentiefe 147A, wodurch sich der gestufte Verlauf der Faltkantenlinie 145 ergibt. Die Faltkantenlinie 145 kann einen linearen, schrägen oder gekrümmten Verlauf oder eine Kombination verschiedener Formen aufweisen.

Auf der Anströmseite 102 befinden sich die Faltkanten auf der gleichen Höhe. Lediglich der Vollständigkeit halber sei angemerkt, dass auch auf der Anströmseite 102 ein gestufter oder anders geformter Verlauf der Faltkantenlinie möglich ist.

Fig. 4B zeigt ein Luftfiltermedium 100, wobei der Faltkantenverlauf 145 auf der Abströmseite 104 einen elliptischen oder paraboloiden Verlauf aufweist.

Fig. 5 zeigt eine schematische Darstellung eines Luftfiltermediums 100 mit vier Filterlagen, wobei die vierte Filterlage 160 in Durchströmungsrichtung 103 vorne angeordnet ist, die dritte Filterlage 150 unmittelbar hinter der vierten Filterlage 160, die erste Filterlage 110 unmittelbar hinter der dritten Filterlage 150 und die zweite Filterlage 120 unmittelbar hinter der ersten Filterlage 110.

Die Packungsdichte der Filterfasern in der vierten, dritten und ersten Filterlage nimmt dabei mit zunehmender Materialtiefe in Richtung der Durchströmungsrichtung 103 zu, kann sich dann in der zweiten Filterlage 120, welche als Nanofaserlage ausgeführt ist, noch einmal erhöhen, um so eine Aufnahme von Schmutzpartikeln über die gesamte Materialtiefe zu ermöglichen, was auch als Volumenspeicherung bezeichnet werden kann.

Fig. 6A zeigt eine schematische Darstellung eines Schnittbildes eines Luftfiltermediums 100 entlang der Schnittlinie A-A' 190, welche in Fig. 1 gezeigt ist.

Die Fasern sind als unregelmäßige Elemente eingezeichnet, wobei die Faserzwischenräume als weiße Fläche zwischen den Fasern verlaufen. Es ist ersichtlich, dass die Anzahl der Fasern mit zunehmender Materialtiefe in Richtung der Durchströmungsrichtung 103 zunimmt und umgekehrt die Zwischenräume weniger und kleiner werden. Damit nimmt die Packungsdichte der Fasern in Richtung der Durchströmungsrichtung 103 zu und die Porosität nimmt im gleichen Maß ab.

In Fig. 6A ist die dritte Filterlage 150, und der erste Filterlagenabschnitt 111 und der zweite Filterlagenabschnitt 113 der ersten Filterlage 110 dargestellt. Die Anzahl der Fasern und die Packungsdichte der Fasern nimmt ersichtlich in Richtung 103 von der dritten Filterlage 150 über die erste Filterlage 110 zu der zweiten Filterlage 120 zu.

Fig. 6B zeigt eine schematische Darstellung eines Schnittbildes der ersten Filterlage 110 entlang der Schnittlinie A-A'. In dem Schnittbild sind der erste Filterlagenabschnitt 111 und der zweite Filterlagenabschnitt 113 jeweils mit ihrer Filterlagenabschnittstiefe 117 dargestellt. Lediglich der Vollständigkeit halber sei daraufhingewiesen, dass die Filterlagenabschnitte 111, 113 unterschiedliche Tiefen 117 in Richtung der Durchströmungsrichtung 103 haben können.

Bei den Filterlagenabschnitten 111, 113 kann es sich um einen Tiefenabschnitt von vorgegebener Tiefe 117 in Richtung der Durchströmungsrichtung 103 einer integralen Filterlage handeln.

Fig. 6C zeigt eine schematische Darstellung der ersten Filterlage 110 mit einem ersten Filterlagenabschnitt 111, wobei dessen Tiefe 117 von der Tiefe des ersten Filterlagenabschnittes aus Fig. 6B abweicht.

Im Zusammenhang mit den Fig. 6A, 6B und 6C soll nun die Ermittlung der Packungsdichte der Fasern in einer Filterlage oder in einem Filterlagenabschnitt erläutert werden.

Zunächst ist ein Schnitt durch ein Luftfiltermedium 100 in Richtung der Schnittlinie 190 zu fertigen. Anschließend kann beispielsweise eine Bildaufnahme der Schnittfläche angefertigt werden, welche der weiteren Analyse der Packungsdichte zugeführt wird. Im nächsten Schritt wird die Tiefe 117 und die Position eines Filterlagenabschnittes bezüglich der Materialtiefe in Richtung 103 auf der Schnittfläche festgelegt. Das Luftfiltermedium kann mit einem Harz getränkt sein, welches auf einer Bildaufnahme durch einen Marker deutlicher sichtbar gemacht werden kann. Ein solches Harz befindet sich auf dem Schnittbild in den Zwischenräumen, aber nicht dort, wo bei der Anfertigung des Schnittes tatsächlich eine Faser durchschnitten wurde.

Die Bestimmung der Faserdichte kann auf der Bildaufnahme durch Auswertung der Bildpunkte erfolgen, auf denen eine Faser zu sehen ist und derjenigen Bildpunkte, die einen Zwischenraum anzeigen. Bei feststehender bzw. bekannter Gesamtanzahl der Bildpunkte in dem Filterlagenabschnitt kann damit die Packungsdichte bestimmt werden, indem die Anzahl der Bildpunkte, die eine Filterfaser zeigen, ins Verhältnis zu der Gesamtanzahl der Bildpunkte in dem Filterlagenabschnitt gesetzt wird. Alternativ kann die Anzahl der Bildpunkte, die einen Zwischenraum zeigen, von der Gesamtanzahl der Bildpunkte abgezogen werden, um so beispielsweise einen Kontrollwert zu haben. In Abhängigkeit davon, ob die Zwischenräume oder die Fasern auf dem Schnittbild besser erkennbar und auswertbar sind, können die entsprechenden Bildpunkte ausgezählt werden.

Die so ermittelte Packungsdichte ist eine mittlere Packungsdichte des ausgewerteten Filterlagenabschnittes. Je kleiner ein solcher Filterlagenabschnitt festgelegt wird, d. h. je kleiner die Tiefe 117 ist, desto geringer sind die Abweichungen der Packungsdichte an den Rändern des Filterlagenabschnittes von dem so ermittelten Mittelwert.

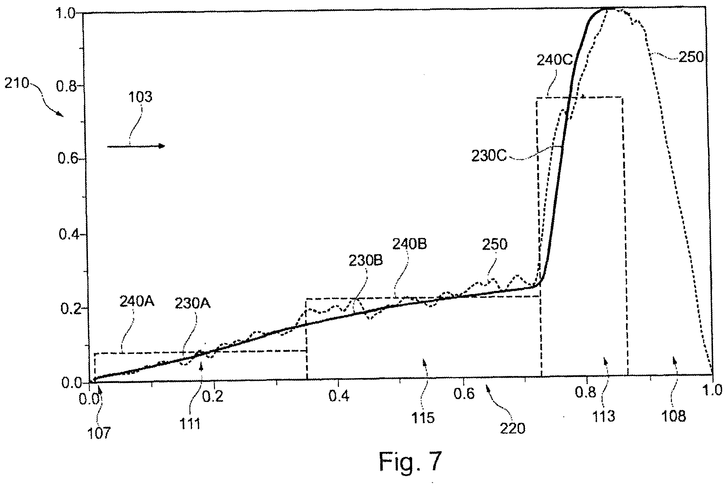

Fig. 7 zeigt einen schematischen Verlauf der Packungsdichte in der ersten Filterlage, wobei die erste Filterlage eine gradierte Filterlage mit synthetischen Fasern ist.

Die Darstellung ist eine normierte Darstellung bezüglich der Packungsdichte und der Materialdicke, d. h. die jeweiligen Angaben zur Packungsdichte 210 sind bezogen auf den höchsten Wert der Packungsdichte in der ersten Filterlage, wobei der höchste Wert auf 1,0 festgelegt ist, bzw. auf die Materialdicke der ersten Filterlage, welche ebenfalls auf 1,0 festgelegt ist. Betreffend die absoluten Maße der Materialdicke wird auf die Ausführungen weiter oben verwiesen.

Zunächst ist ersichtlich, dass die Packungsdichte in Durchströmungsrichtung 103 zunimmt, d. h. ausgehend von einer Materialtiefe von 0,0 in Richtung der maximalen Materialdicke. In einem Anströmabschnitt 107, welcher in diesem Ausführungsbeispiel sehr gering ausfällt und sich bis zu einer normierten Materialtiefe von 0,02 in das Material in Durchströmungsrichtung erstreckt, nimmt die Packungsdichte bei 0,0 beginnend zu.

Bei Übergang in den ersten Filterlagenabschnitt 111 nimmt die Packungsdichte weiter zu und steigt innerhalb des ersten Filterlagenabschnittes 111 und innerhalb des Mittelabschnittes 115 an. In dem zweiten Filterlagenabschnitt 113 erfolgt ein im Vergleich zu den Abschnitten 111, 115 stärkerer Anstieg der Packungsdichte, bis diese von dem zweiten Filterlagenabschnitt 113 in den Abströmabschnitt 108 übergeht, in welchem die Packungsdichte absinkt.

In jedem Abschnitt 111, 115, 113 sind jeweils ein geglätteter Verlauf 230A, 230B, 230C der Packungsdichte und eine mittlere Packungsdichte 240A, 240B, 240C eingezeichnet, wobei die mittlere Packungsdichte sich aus der Packungsdichte in dem jeweiligen Filterlagenabschnitt ergibt. Der geglättete Packungsdichteverlauf kann beispielsweise mittels des Mechanismus des sich verschiebenden Zahlenfensters (sliding window) dargestellt werden, bei welchem eine bestimmte Anzahl an Packungsdichtewerten nebeneinander liegender Unterabschnitte für die Berechnung des geglätteten Packungsdichteverlaufs herangezogen wird. Für den nächsten Wert wird in einer Richtung, z. B. in Durchströmungsrichtung, ein neuer Wert hinzugenommen und derjenige Wert, der entgegengesetzt der Durchströmungsrichtung als letzter enthalten war, fällt weg.

Der Packungsdichteverlauf 230A geht an dem Übergang von dem ersten Filterlagenabschnitt 111 zu dem Mittelabschnitt 115 sprunglos in den Packungsdichteverlauf 230B über. Gleiches gilt für den Übergang von dem Mittelabschnitt 115 zu dem zweiten Filterlagenabschnitt 113. Unabhängig davon ist die Zunahme der Packungsdichte in dem zweiten Filterlagenabschnitt 113 höher als in dem Mittelabschnitt oder in dem ersten Filterlagenabschnitt.

Die Steigung des Packungsdichteverlaufs in dem ersten Filterlagenabschnitt und in dem Mittelabschnitt kann etwa 1 betragen. In dem zweiten Filterlagenabschnitt kann die Steigung bis zu etwa 5 betragen. Diese Werte ermitteln sich als Quotient des Anstiegs der normierten Packungsdichte über eine Zunahme der normierten Materialtiefe.

Der erste Filterlagenabschnitt 111 verläuft angegeben in normierter Materialdicke von etwa 0,02 bis zu etwa 0,35 und weist eine normierte mittlere Packungsdichte von etwa 0,07 bis etwa 0,12 auf.

Der Mittelabschnitt 115 verläuft von etwa 0,35 bis etwa 0,73 der normierten Materialdicke und weist eine normierte mittlere Packungsdichte von etwa 0,2 bis 0,25 auf. Insbesondere ist die normierte mittlere Packungsdichte des Mittelabschnitts 115 größer als die normierte mittlere Packungsdichte des ersten Filterlagenabschnitts 111 und kleiner als die normierte mittlere Packungsdichte des zweiten Filterlagenabschnitts 112.

Der zweite Filterlagenabschnitt verläuft von etwa 0,73 bis etwa 0,85 der normierten Materialdicke und weist eine normierte mittlere Packungsdichte von etwa 0,7 bis 0,8 auf.

Es ergibt sich ein Verhältnis der normierten mittlere Packungsdichte des ersten Filterlagenabschnitts 111 zu einer normierten mittleren Packungsdichte des zweiten Filterlagenabschnitts 112 zwischen 0,1 bis 0,4, insbesondere zwischen 0,1 bis 0,2. Ein relativ starker Gradient wird ausgebildet.

Daneben ist in Fig. 7 noch ein beispielhafter gemessener Verlauf 250 der Packungsdichte dargestellt. Der tatsächlich gemessene Verlauf kann um den geglätteten Wert der Packungsdichte 230A, 230B, 230C schwanken, wie dies beispielhaft von der gepunkteten Linie 250 gezeigt wird.

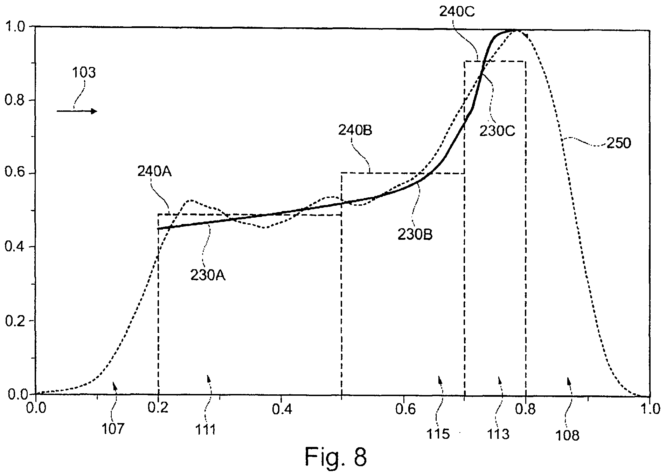

Fig. 8 zeigt analog zu Fig. 7 einen Packungsdichteverlauf einer gradierten Filterlage mit zellulosebasierten Fasern, insbesondere einer ersten Filterlage 110, die zumindest nahezu aus Cellulosefasern besteht. Betreffend die Fig. 8 gelten die allgemeinen Erläuterungen im Zusammenhang mit Fig. 7 hinsichtlich des geglätteten Packungsdichteverlaufs und des mittleren Packungsdichteverlaufs in den entsprechenden Filterlagenabschnitten.

Der Anströmabschnitt 107 kann sich über die normierte Materialdicke bis etwa 0,2 erstrecken.

Der erste Filterlagenabschnitt 111 erstreckt sich zwischen etwa 0,2 und 0,5 der normierten Materialdicke der ersten Filterlage. In diesem Abschnitt 111 beträgt die normierte mittlere Packungsdichte 0,35 bis 0,65, im Speziellen etwa 0,5 und der geglättete Packungsdichteverlauf erstreckt sich von etwa 0,45 bei einer Materialdicke von 0,2 bis zu etwa 0,52 bei einer Materialdicke von 0,5.

Der Mittelabschnitt 115 erstreckt sich zwischen etwa 0,5 und 0,7 der normierten Materialdicke. Die normierte mittlere Packungsdichte beträgt 0,5 bis 0,7, im Speziellen etwa 0,6, und der geglättete Packungsdichteverlauf erstreckt sich von etwa 0,52 bei einer Materialdicke von 0,5 bis etwa 0,75 bei einer Materialdicke von 0,7. Insbesondere ist die normierte mittlere Packungsdichte des Mittelabschnitts 115 größer als die normierte mittlere Packungsdichte des ersten Filterlagenabschnitts 111 und kleiner als die normierte mittlere Packungsdichte des zweiten Filterlagenabschnitts 112.

Der zweite Filterlagenabschnitt 113 erstreckt sich zwischen etwa 0,7 und 0,8 der normierten Materialdicke. Die normierte mittlere Packungsdichte beträgt etwa 0,9 bis 0,93 und der geglättete Packungsdichteverlauf erstreckt sich von etwa 0,75 bei einer Materialdicke von 0,7 bis zu 1,0 bei einer Materialdicke von etwa 0,8.

Es ergibt sich ein Verhältnis einer normierten mittleren Packungsdichte des ersten Filterlagenabschnitts 111 zu einer normierten mittleren Packungsdichte des zweiten Filterlagenabschnitts 112 zwischen 0,25 bis 0,65, insbesondere zwischen 0,45 bis 0,60. Dank dieses Crradienten stellen sich für eine cellulosebasierte Filterlage 110 besonders günstige Verhältnisse ein.

Anschließend fällt der Wert der Packungsdichte in dem Abströmabschnitt 108 bis auf 0,0.

Bei einem weiteren nicht gezeigten Beispiel weist die erste Filterlage 110 mindestens 50 Gewichtsprozent Cellulosefasern und mindestens 25 Gewichtsprozent synthetische Fasern auf. Günstige Verhältnisse ergeben sich in diesem Fall, wenn das Verhältnis einer normierten mittleren Packungsdichte des ersten Filterlagenabschnitts 111 zu einer normierten mittleren Packungsdichte des zweiten Filterlagenabschnitts 112 zwischen 0,25 bis 0,65, vorzugsweise zwischen 0,25 bis 0,35, beträgt. Zudem weist die erste Filterlage 110, wie bei den vorstehenden Beispielen, einen Mittelabschnitt 115 mit einer normierten mittleren Packungsdichte auf, die größer als die normierte mittlere Packungsdichte des ersten Filterlagenabschnitts 111 und kleiner als die normierte mittlere Packungsdichte des zweiten Filterlagenabschnitts 112 ist.

## Bezugszeichenliste

| | |
|---|---|
| 100 | Luftfiltermedium |
| 102 | Anströmrichtung |
| 103 | Durchströmungsrichtung |
| 104 | Abströmrichtung |
| 107 | Anströmtiefenabschnitt |
| 108 | Abströmtiefenabschnitt |
| 110 | erste Filterlage |
| 111 | erster Filterlagenabschnitt |
| 112 | erste Oberfläche, Anströmfläche |
| 113 | zweiter Filterlagenabschnitt |
| 114 | zweite Oberfläche |
| 115 | Mittelabschnitt |
| 117 | Tiefe eines Filterlagenabschnittes |
| 120 | zweite Filterlage |
| 122 | erste Oberfläche |
| 124 | zweite Oberfläche, Abströmfläche |
| 130 | Faser |
| 133 | Faserquerschnitt |
| 135 | Pore |
| 140 | Faltkante |
| 145 | Verlauf der Faltkanten auf der Abströmseite |
| 150 | dritte Filterlage |
| 160 | vierte Filterlage |
| 190 | Schnittlinie A-A' |
| 210 | normierte Packungsdichte |
| 220 | normierte Filterlagendicke |
| 230 | geglätteter Packungsdichteverlauf |
| 240 | mittlerer Packungsdichteverlauf |
| 250 | Messbeispiel des Packungsdichteverlaufs |

## Patentansprüche

1. Luftfilterelement mit einem Filtermedium, aufweisend:

   eine erste Filterlage (110); und
   eine zweite Filterlage (120);
   wobei die erste Filterlage einen ersten Filterlagenabschnitt (111) und einen zweiten Filterlagenabschnitt (113), der in einer Durchströmungsrichtung (103) des Filtermediums (100) hinter dem ersten Filterlagenabschnitt angeordnet ist, aufweist;
   wobei der erste Filterlagenabschnitt (111) eine erste Packungsdichte von Fasern aufweist; und
   wobei der zweite Filterlagenabschnitt (113) eine von der ersten Packungsdichte von Fasern abweichende zweite Packungsdichte von Fasern aufweist;
   wobei die zweite Filterlage (120) Nanofasern aufweist und in Durchströmungsrichtung (103) hinter der ersten Filterlage (110) angeordnet ist;
   wobei die erste Filterlage (110) einen Mittelabschnitt (115) aufweist, der in Durchströmungsrichtung (103) zwischen dem ersten Filterlagenabschnitt (111) und dem zweiten Filterlagenabschnitt (113) angeordnet ist,
   wobei eine Packungsdichte des Mittelabschnitts (115) in Richtung der Durchströmungsrichtung der ersten Filterlage (110) zunimmt,
   wobei das Filtermedium ein gefaltetes Filtermedium ist,
   wobei die zweite Filterlage auf der Abströmseite des Filterelements angeordnet ist.

2. Luftfilterelement nach Anspruch 1,
   wobei die erste Filterlage einen Anströmtiefenabschnitt (107) aufweist und der erste Filterlagenabschnitt (111) in Durchströmungsrichtung (103) hinter dem Anströmtiefenabschnitt angeordnet ist.

3. Luftfilterelement nach einem der vorhergehenden Ansprüche,
wobei der Anströmtiefenabschnitt an der ersten Oberfläche (112) des Filtermediums angeordnet ist.

4. Luftfilterelement nach einem der vorhergehenden Ansprüche,
wobei die erste Filterlage einen Abströmtiefenabschnitt (108) aufweist und der zweite Filterlagenabschnitt (113) in Durchströmungsrichtung (103) vor dem Abströmtiefenabschnitt angeordnet ist.

5. Luftfilterelement nach einem der vorhergehenden Ansprüche,
wobei die zweite Filterlage (120) an einer Abströmfläche des Filtermediums (100) angeordnet ist.

6. Luftfilterelement nach einem der vorhergehenden Ansprüche,

wobei der erste Filterlagenabschnitt (111) eine erste Packungsdichte von Fasern aufweist und der zweite Filterlagenabschnitt (113) eine zweite Packungsdichte von Fasern aufweist;
wobei ein Wert der zweiten Packungsdichte verschieden ist von einem Wert der ersten Packungsdichte.

7. Luftfilterelement nach einem der vorhergehenden Ansprüche,
wobei eine Packungsdichte von Fasern der ersten Filterlage in Durchströmungsrichtung (103) von dem ersten Filterlagenabschnitt (111) zu dem zweiten Filterlagenabschnitt (113) zunimmt.

8. Luftfilterelement nach einem der vorhergehenden Ansprüche,
wobei eine Packungsdichte des zweiten Filterlagenabschnitts (113) größer ist als eine Packungsdichte der zweiten Filterlage (120).

9. Luftfilterelement nach einem der vorhergehenden Ansprüche,

wobei der erste Filterlagenabschnitt (111) erste Fasern mit einem ersten Querschnitt aufweist;
wobei der zweite Filterlagenabschnitt (113) zweite Fasern mit einem zweiten Querschnitt aufweist;
wobei der Mittelabschnitt (115) erste Fasern und zweite Fasern aufweist.

10. Luftfilterelement nach Anspruch 9,
wobei die ersten Fasern und die zweiten Fasern in dem Mittelabschnitt (115) so angeordnet sind, dass ein Anteil der zweiten Fasern an der Summe der ersten Fasern und zweiten Fasern auf einem Tiefenabschnitt der ersten Filterlage in Richtung der Durchströmungsrichtung der ersten Filterlage zunimmt.

11. Luftfilterelement nach einem der vorhergehenden Ansprüche,
wobei die zweite Filterlage eine Faser mit einem Faserdurchmesser zwischen ungefähr 50 nm und ungefähr 500 nm, vorzugsweise 100 nm bis 300 nm aufweist.

12. Luftfilterelement nach einem der vorhergehenden Ansprüche,
wobei das Verhältnis einer normierten mittleren Packungsdichte des ersten Filterlagenabschnitts (111) zu einer normierten mittleren Packungsdichte des zweiten Filterlagenabschnitts (112) zwischen 0,1 bis 0,4, vorzugsweise zwischen 0,1 bis 0,2, beträgt, wobei vorzugsweise die erste Filterlage (110) einen Mittelabschnitt (115) mit einer normierten mittleren Packungsdichte aufweist, die größer als die normierte mittlere Packungsdichte des ersten Filterlagenabschnitts (111) und kleiner als die normierte mittlere Packungsdichte des zweiten Filterlagenabschnitts (112) ist, und wobei vorzugsweise die erste Filterlage zumindest überwiegend aus synthetischen Fasern gebildet ist.

13. Luftfilterelement nach einem der vorhergehenden Ansprüche,
wobei das Verhältnis einer normierten mittleren Packungsdichte des ersten Filterlagenabschnitts (111) zu einer normierten mittleren Packungsdichte des zweiten Filterlagenabschnitts (112) zwischen 0,25 bis 0,65, vorzugsweise zwischen 0,45 bis 0,60, beträgt, wobei vorzugsweise die erste Filterlage (110) einen Mittelabschnitt (115) mit einer normierten mittleren Packungsdichte aufweist, die größer als die normierte mittlere Packungsdichte des ersten Filterlagenabschnitts (111) und kleiner als die normierte mittlere Packungsdichte des zweiten Filterlagenabschnitts (112) ist, und wobei vorzugsweise die erste Filterlage zumindest nahezu aus Cellulosefasern besteht.

14. Luftfilterelement nach einem der vorhergehenden Ansprüche,
wobei das Verhältnis einer normierten mittleren Packungsdichte des ersten Filterlagenabschnitts (111) zu einer normierten mittleren Packungsdichte des zweiten Filterlagenabschnitts (112) zwischen 0,25 bis 0,65, vorzugsweise zwischen 0,25 bis 0,35, beträgt, wobei vorzugsweise die erste Filterlage (110) einen Mittelabschnitt (115) mit einer normierten mittleren Packungsdichte aufweist, die größer als die normierte mittlere Packungsdichte des ersten Filterlagenabschnitts (111) und kleiner als die normierte mittlere Packungsdichte des zweiten Filterlagenabschnitts (112) ist, und wobei vorzugsweise die erste Filterlage mindestens 50 Gewichtsprozent Cellulosefasern und mindestens 25 Gewichtsprozent synthetische Fasern aufweist.

**Claims**

1. Air filter element with a filter medium, comprising:

    a first filter layer (110); and
    a second filter layer (120);
    wherein the first filter layer has a first filter layer section (111) and a second filter layer section (113) which is disposed in a through-flow direction (103) of the filter medium (100) downstream of the first filter layer section;
    wherein the first filter layer section (111) has a first packing efficiency of fibers; and
    wherein the second filter layer section (113) has a second packing efficiency of fibers differing from the first packing efficiency of fibers;
    wherein the second filter layer (120) comprises nanofibers and is disposed in through-flow direction (103) downstream of the first filter layer (110);
    wherein the first filter layer (110) has a central section (115) which is disposed in through-flow direction (103) between the first filter layer section (111) and the second filter layer section (113),
    wherein a packing efficiency of the central section (115) increases in the direction of the through-flow direction of the first filter layer (110),
    wherein the filter medium is a folded filter medium,
    wherein the second filter layer is disposed on the outflow side of the filter element.

2. Air filter element according to claim 1, wherein the first filter layer has an inflow depth section (107) and wherein the first filter layer section (111) is disposed in through-flow direction (103) downstream of the inflow depth section.

3. Air filter element according to any one of the preceding claims, wherein the inflow depth section is disposed at the first surface (112) of the filter medium.

4. Air filter element according to any one of the preceding claims, wherein the first filter layer has an outflow depth section (108) and wherein the second filter layer section (113) is disposed in through-flow direction (103) upstream of the outflow depth section.

5. Air filter element according to any one of the preceding claims,

wherein the second filter layer (120) is disposed at an outflow surface of the filter medium (100).

6. Air filter element according to any one of the preceding claims,

    wherein the first filter layer section (111) has a first packing efficiency of fibers and wherein the second filter layer section (113) has a second packing efficiency of fibers;
    wherein a value of the second packing efficiency differs from a value of the first packing efficiency.

7. Air filter element according to any one of the preceding claims,
    wherein a packing efficiency of fibers of the first filter layer increases in throughflow direction (103) from the first filter layer section (111) to the second filter layer section (113).

8. Air filter element according to any one of the preceding claims,
    wherein a packing efficiency of the second filter layer section (113) is larger than a packing efficiency of the second filter layer (120).

9. Air filter element according to any one of the preceding claims,

    wherein the first filter layer section (111) comprises first fibers with a first cross-section;
    wherein the second filter layer section (113) comprises second fibers with a second cross-section,
    wherein the central section (115) comprises first and second fibers.

10. Air filter element according to claim 9, wherein the first fibers and the second fibers are disposed in the central section (115) in such a way that an amount of the second fibers compared to the sum of the first fibers and the second fibers increases on a depth section of the first filter layer in the direction of the through-flow direction of the first filter layer.

11. Air filter element according to any one of the preceding claims,
    wherein the second filter layer comprises a fiber with a fiber diameter between approximately 50 nm and approximately 500 nm, preferably between 100 nm and 300 nm.

12. Air filter element according to any one of the preceding claims,

    wherein the ratio of a standardized average packing efficiency of the first filter layer section (111) in relation to a standardized average packing efficiency of the second filter layer section (112) is between 0.1 and 0.4, preferably between 0.1 and 0.2, wherein preferably the first filter layer (110) has a central section (115) with a standardized average packing efficiency which is larger than the standardized average packing efficiency of the first filter layer section (111) and smaller than the standardized average packing efficiency of the second filter layer section (112), and wherein preferably the first filter layer is at least mainly made of synthetic fibers.

13. Air filter element according to any one of the preceding claims,
wherein the ratio of a standardized average packing efficiency of the first filter layer section (111) in relation to a standardized average packing efficiency of the second filter layer section (112) is between 0.25 and 0.65, preferably between 0.45 and 0.60, wherein preferably the first filter layer (110) has a central section (115) with a standardized average packing efficiency which is larger than the standardized average packing efficiency of the first filter layer section (111) and smaller than the standardized average packing efficiency of the second filter layer section (112), and wherein preferably the first filter layer consists at least almost of cellulose fibers.

14. Air filter element according to any one of the preceding claims,
wherein the ratio of a standardized average packing efficiency of the first filter layer section (111) in relation to a standardized average packing efficiency of the second filter layer section (112) is between 0.25 and 0.65, preferably between 0.25 and 0.35, wherein preferably the first filter layer (110) has a central section (115) with a standardized average packing efficiency which is larger than the standardized average packing efficiency of the first filter layer section (111) and smaller than the standardized average packing efficiency of the second filter layer section (112), and wherein preferably the first filter layer comprises at least 50 percent by weight of cellulose fibers and at least 25 percent by weight of synthetic fibers.

**Revendications**

1. Elément de filtre à air avec un milieu filtrant, présentant :

   une première couche filtrante (110), et
   une deuxième couche filtrante (120),
   la première couche filtrante présentant une première section de couche filtrante (111) et une deuxième section de couche filtrante (113), laquelle est disposée, dans une direction de passage (103) du milieu filtrant (100), en aval de la première section de couche filtrante,
   la première section de couche filtrante (111) présentant un premier taux de remplissage de fibres, et
   la deuxième section de couche filtrante (113) présentant un deuxième taux de remplissage de fibres différent du premier taux de remplissage de fibres,
   la deuxième couche filtrante (120) présentant des nanofibres et étant disposée dans la direction de passage (103) en aval de la première couche filtrante (110),
   la première couche filtrante (110) présentant une section médiane (115), laquelle est disposée, dans la direction de passage (103), entre la première section de couche filtrante (111) et la deuxième section de couche filtrante (113),
   un taux de remplissage de la section médiane (115) augmentant vers la direction de passage de la première couche filtrante (110),
   le milieu filtrant étant un milieu filtrant plié,
   la deuxième couche filtrante étant disposée du côté aval de l'élément filtrant.

2. Elément de filtre à air selon la revendication 1,
la première couche filtrante présentant une section de profondeur amont (107) et la première section de couche filtrante (111) étant disposée dans la direction de passage (103) en aval de la section de profondeur amont.

3. Elément de filtre à air selon l'une des revendications précédentes,
la section de profondeur amont étant disposée sur la première surface (112) du milieu filtrant.

4. Elément de filtre à air selon l'une des revendications précédentes,
la première couche filtrante présentant une section de profondeur aval (108) et la deuxième section de couche filtrante (113) étant disposée dans la direction de passage (103) en amont de la section de profondeur aval.

5. Elément de filtre à air selon l'une des revendications précédentes,
la deuxième couche filtrante (120) étant disposée sur une surface aval du milieu filtrant (100).

6. Elément de filtre à air selon l'une des revendications précédentes,

   la première section de couche filtrante (111) présentant un premier taux de remplissage de fibres et la deuxième section de couche filtrante (113) présentant un deuxième taux de remplissage de fibres,

une valeur du deuxième taux de remplissage étant différente d'une valeur du premier taux de remplissage.

7. Elément de filtre à air selon l'une des revendications précédentes,
un taux de remplissage de fibres de la première couche filtrante augmentant dans la direction de passage (103) de la première section de couche filtrante (111) vers la deuxième section de couche filtrante (113).

8. Elément de filtre à air selon l'une des revendications précédentes,
un taux de remplissage de la deuxième section de couche filtrante (113) étant supérieur à un taux de remplissage de la deuxième couche filtrante (120).

9. Elément de filtre à air selon l'une des revendications précédentes,

la première section de couche filtrante (111) présentant des premières fibres avec une première section,
la deuxième section de couche filtrante (113) présentant des deuxièmes fibres avec une deuxième section,
la section médiane (115) présentant des premières fibres et des deuxièmes fibres.

10. Elément de filtre à air selon la revendication 9,
les premières fibres et les deuxièmes fibres étant disposées dans la section médiane (115) de manière à ce qu'une partie des deuxièmes fibres augmente en comparaison avec la totalité des premières fibres et des deuxièmes fibres sur une section profonde de la première couche filtrante vers la direction de passage de la première couche filtrante.

11. Elément de filtre à air selon l'une des revendications précédentes,
la deuxième couche filtrante présentant une fibre d'un diamètre de fibre compris entre environ 50 nm et environ 500 nm, de préférence entre 100 nm et 300 nm.

12. Elément de filtre à air selon l'une des revendications précédentes,
le rapport entre un taux de remplissage moyen standardisé de la première section de couche filtrante (111) et un taux de remplissage moyen standardisé de la deuxième section de couche filtrante (112) se situant entre 0,1 et 0,4, de préférence entre 0,1 et 0,2, la première couche filtrante (110) comportant de préférence une section médiane (115) avec un taux de remplissage moyen standardisé qui est supérieur au taux de remplissage moyen standardisé de la première section de couche filtrante (111) et inférieur au taux de remplissage moyen standardisé de la deuxième section de couche filtrante (112), et de préférence la première couche filtrante étant constituée, au moins principalement, de fibres synthétiques.

13. Elément de filtre à air selon l'une des revendications précédentes,
le rapport entre un taux de remplissage moyen standardisé de la première section de couche filtrante (111) et un taux de remplissage moyen standardisé de la deuxième section de couche filtrante (112) se situant entre 0,25 et 0,65, de préférence entre 0,45 et 0,60, la première couche filtrante (110) comportant de préférence une section médiane (115) avec un taux de remplissage moyen standardisé qui est supérieur au taux de remplissage moyen standardisé de la première section de couche filtrante (111) et inférieur au taux de remplissage moyen standardisé de la deuxième section de couche filtrante (112) et de préférence la première couche filtrante étant constituée, au moins principalement, de fibres cellulosiques.

14. Elément de filtre à air selon l'une des revendications précédentes,
le rapport entre un taux de remplissage moyen standardisé de la première section de couche filtrante (111) et un taux de remplissage moyen standardisé de la deuxième section de couche filtrante (112) se situant entre 0,25 et 0,65, de préférence entre 0,25 et 0,35, de préférence la première couche filtrante (110) comportant une section médiane (115) avec un taux de remplissage moyen standardisé qui est supérieur au taux de remplissage moyen standardisé de la première section de couche filtrante (111) et inférieur au taux de remplissage moyen standardisé de la deuxième section de couche filtrante (112), et de préférence la première couche filtrante étant constituée d'au moins 50 pour-cent en poids de fibres cellulosiques et d'au moins 25 pour-cent en poids de fibres synthétiques.

**Fig. 1**

**Fig. 2**

Fig. 3

Fig. 4A

Fig. 4B

**Fig. 5**

**Fig. 6A**

**Fig. 6B**

**Fig. 6C**

Fig. 7

EP 2 988 846 B2

Fig. 8

**IN DER BESCHREIBUNG AUFGEFÜHRTE DOKUMENTE**

**In der Beschreibung aufgeführte Patentdokumente**

- EP 2060311 A1
- US 2011259813 A1

**In der Beschreibung aufgeführte Nicht-Patentliteratur**

- Vliesstoffe: Rohstoffe, Herstellung, Anwendung, Eigenschaften, Prüfung. 2012